(19) Europäisches Patentamt European Patent Office Office européen des brevets

(11) **EP 4 622 274 A1**

(12) **EUROPEAN PATENT APPLICATION**
published in accordance with Art. 153(4) EPC

(43) Date of publication:
24.09.2025 Bulletin 2025/39

(21) Application number: 23919550.6

(22) Date of filing: 27.12.2023

(51) International Patent Classification (IPC):
*H04N 21/2343* (2011.01)

(52) Cooperative Patent Classification (CPC):
H04N 21/2343; H04N 21/4402

(86) International application number:
PCT/CN2023/142473

(87) International publication number:
WO 2024/159990 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.02.2023 CN 202310105450

(71) Applicant: Huawei Technologies Co., Ltd.
Shenzhen, Guangdong 518129 (CN)

(72) Inventors:
• XU, Weiwei
  Shenzhen, Guangdong 518129 (CN)
• WEN, Jinsong
  Shenzhen, Guangdong 518129 (CN)
• CHENG, Cheng
  Shenzhen, Guangdong 518129 (CN)
• AO, Huanhuan
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **TRANSCODING METHOD AND APPARATUS, AND ELECTRONIC DEVICE**

(57) Embodiments of this application provide a transcoding method and apparatus, and an electronic device. The transcoding apparatus includes a decoder and an encoder. The decoder is configured to: receive a first bitstream output by an application; decode the first bitstream to obtain a first image and first format information of the first image; embed the first format information into the first image to obtain a second image; and send the second image to the application. The encoder is configured to: receive a third image output by the application, where the third image is the second image or a second image edited by the application; determine second format information based on the third image; obtain preconfigured third format information; perform format conversion on the third image based on the second format information and the third format information to obtain a fourth image; encode the fourth image to obtain a second bitstream; and send the second bitstream to the application. In this way, a bitstream can be correctly transcoded, and an anomaly can be avoided in an image obtained by a receive end through decoding.

FIG. 1b

## Description

This application claims priority to Chinese Patent Application No. 202310105450.6, filed with the China National Intellectual Property Administration on February 3, 2023 and entitled "TRANSCODING METHOD AND APPARATUS, AND ELECTRONIC DEVICE", which is incorporated herein by reference in its entirety.

## TECHNICAL FIELD

Embodiments of this application relate to the encoding/decoding field, and in particular, to a transcoding method and apparatus, and an electronic device.

## BACKGROUND

Usually, when a user A needs to share (or forward) a video or an image, the user A may perform a sharing operation or a forwarding operation in an application, such as instant messaging software, a short video platform, or a social media platform, on a terminal device A, to send the video or the image to a terminal device B. In this way, a user B can play the video or display the image in an application, such as instant messaging software, a short video platform, or a social media platform, on the terminal device B.

Video forwarding is used as an example. When a video forwarded by the terminal device A is a high dynamic range (High Dynamic Range, HDR) video, if the terminal device A does not support forwarding of an HDR video, or a server does not support forwarding of an HDR video, or the terminal device B does not support playing of an HDR video, the terminal device A needs to transcode the HDR video into a standard dynamic range (Standard Dynamic Range, SDR) video, and then send the SDR video.

However, currently, during transcoding, after decoding an HDR bitstream to obtain HDR video data, most applications directly encode the HDR video data based on an SDR format to obtain an SDR bitstream. Consequently, an SDR image displayed on the terminal device B is abnormal, for example, the image is pale.

## SUMMARY

To resolve the foregoing technical problem, this application provides a transcoding method and apparatus, and an electronic device. The transcoding apparatus is deployed at a transmit end, and can correctly transcode a bitstream, to avoid an anomaly in an image obtained by a receive end through decoding.

For example, an application (for example, instant messaging software, a short video platform, or a social media platform) is further deployed at the transmit end (which may also be referred to as a sending device or a sending terminal). A user may perform an operation of sharing (or forwarding) a video or an image in the application at the transmit end. In response to the user operation, the application may invoke the transcoding apparatus to perform the transcoding method in this application, to transcode the to-be-shared (or to-be-forwarded) video or image.

For example, in this application, both a client on a mobile terminal and a client on a personal computer (Personal Computer, PC) may be referred to as applications.

According to a first aspect, an embodiment of this application provides a transcoding apparatus. The transcoding apparatus includes a decoder and an encoder.

The decoder is configured to: receive a first bitstream output by an application; decode the first bitstream to obtain a first image and first format information of the first image; embed the first format information into the first image to obtain a second image; and send the second image to the application.

The encoder is configured to: receive a third image output by the application, where the third image is the second image or a second image edited by the application; determine second format information based on the third image; obtain preconfigured third format information; perform format conversion on the third image based on the second format information and the third format information to obtain a fourth image; encode the fourth image to obtain a second bitstream; and send the second bitstream to the application.

The second format information may be the same as the second format information.

In this way, during decoding, source format information (namely, the first format information) of an image is embedded into the image; and during encoding, the image can be correctly transcoded based on preconfigured expected format information (namely, the third format information) of an encoded image and based on source format information that is determined based on an image obtained through decoding. This can avoid an anomaly in an image obtained by a receive end through decoding, and ensure quality of the image obtained by the receive end through decoding.

It should be noted that the transcoding apparatus (including the encoder and the decoder) in this application is a part of an operating system, and is provided by the operating system instead of the application. In this way, transcoding does not need to depend on the application. To be specific, even if the application does not have a transcoding function, the application can invoke the transcoding apparatus in the operating system to implement transcoding. This reduces complexity of developing the application and a function requirement for the application. In addition, the operating system can be compatible with more applications.

For example, the editing may include but is not limited to adding text, adding a filter, rotating, zooming, and the like. This is not limited in this application.

It should be noted that the decoder in this application may include a decoding module configured to implement decoding and an information embedding module configured to implement information embedding. The decoding module may be implemented by using hardware or software (for example, software code in a processor). The information embedding module may be implemented by using hardware or software (for example, software code in a processor).

It should be noted that the encoder in this application may include an encoding module configured to implement encoding and a format conversion module configured to implement format conversion. The encoding module may be implemented by using hardware or software (for example, software code in a processor). The format conversion module may be implemented by using hardware or software (for example, software code in a processor).

According to the first aspect, the decoder is specifically configured to: select a target area from the first image, where an overlapping part exists between an edge of the target area and an edge of the first image, and a size of the target area is less than a size of the first image; and embed the first format information into the target area of the first image to obtain the second image. To be specific, the first format information is embedded into an area, close to an edge or a corner, of the first image. This can reduce impact on visual experience with the first image after the first format information is embedded.

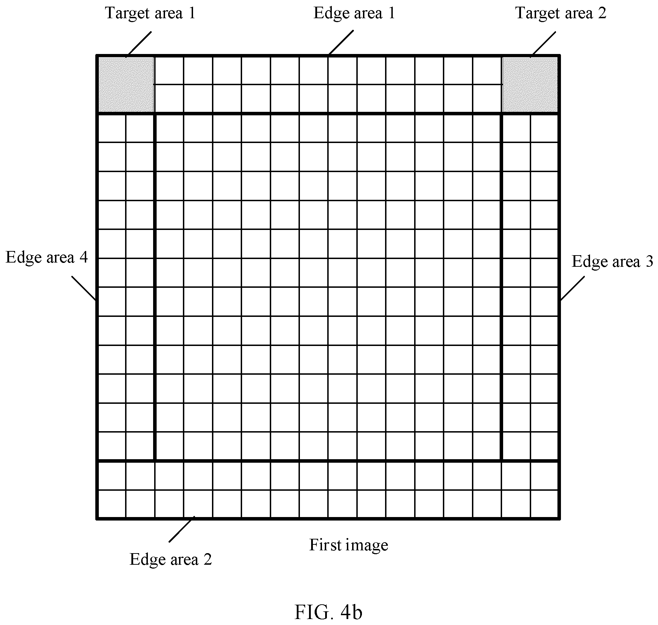

For example, an edge area in the first image may be first determined, and then the target area is selected from the edge area. The edge area may be an area that is located at the edge of the first image and whose edge has an overlapping part with the edge of the first image, and a size of the edge area is less than the size of the first image. For example, an edge area 1, an edge area 2, an edge area 3, and an edge area 4 are shown in FIG. 4b. For example, the size of the first image is $16\times16$, sizes of the edge area 1 and the edge area 2 are $2\times16$, and sizes of the edge area 3 and the edge area 4 are $2\times12$.

For example, a quantity of target areas may be determined based on a quantity of types of format information included in the first format information.

In a possible manner, the quantity of target areas is equal to the quantity of types of format information included in the first format information. In this case, one type of format information included in the first format information corresponds to one target area. For example, when the first format information includes first color gamut format information and a first optical-electro transfer function, the quantity of target areas may be 2. To be specific, the first color gamut format information corresponds to one target area, and the first optical-electro transfer function corresponds to one target area.

In a possible manner, the quantity of target areas is greater than the quantity of types of format information included in the first format information. In this case, one type of format information included in the first format information corresponds to at least one target area. For example, when the first format information includes first color gamut format information and a first optical-electro transfer function, the quantity of target areas may be 4. To be specific, the first color gamut format information corresponds to two target areas, and the first optical-electro transfer function corresponds to two target areas.

For example, the size of the target area may be represented by $m\times n$, where n and m are positive integers, and n may be equal to or different from m. This is not limited in this application. For example, when there are a plurality of target areas, sizes of the plurality of target areas may be the same or different. This is not limited in this application.

Assuming that n=m=2 and the first format information includes the first color gamut format information and the first optical-electro transfer function, two $4\times4$ target areas, for example, a target area 1 and a target area 2 in FIG. 4b, may be selected.

According to any one of the first aspect or the foregoing implementations of the first aspect, the decoder determines a first index value of the first format information, and embeds the first index value of the first format information into the target area of the first image to obtain the second image. In this way, compared with embedding the first format information into the first image, embedding the first index value of the first format information can reduce a data size of the second image, so that a data size of the second bitstream obtained by the encoder by encoding the fourth image can be reduced.

For example, a format information set may be pre-established, and a location index value of the first format information in the format information set or a preset index value of the first format information in the format information set is used as the first index value.

For example, the first index value may be represented in a binary form, a decimal form, or a hexadecimal form. This is not limited in this application.

It should be understood that a character string corresponding to the first format information (that is, the first format information itself) may alternatively be embedded into the target area of the first image. A manner of embedding the character string corresponding to the first format information into the first image is not limited in this application, provided that the manner of embedding the character string corresponding to the first format information into the first image can resist to a zooming operation or a rotation operation to some extent (to be specific, rotation or zooming of the second image does not damage the first format information).

According to any one of the first aspect or the foregoing implementations of the first aspect, the decoder is specifically configured to: replace pixel values of all or some of pixels included in the target area with the first index value of the first format information. In this way, the first format information can be quickly embedded into the first image.

It should be understood that the first index value may alternatively be embedded into the target area in another manner. This is not limited in this application.

According to any one of the first aspect or the foregoing implementations of the first aspect, the encoder is specifically configured to: extract a second index value from the third image; and determine the second format information based on the second index value.

To be specific, when the decoder has embedded the first index value into the first image, the second index value may be extracted from the third image, and then the format information set is searched based on the second index value, to determine the second format information. In this way, the second format information can be quickly determined.

It should be understood that, when the decoder has embedded the character string of the first format information into the first image, the encoder may directly extract the second format information from the third image.

According to any one of the first aspect or the foregoing implementations of the first aspect, the second format information includes second color gamut format information, and the third format information includes third color gamut format information; and the encoder is specifically configured to: when the second color gamut format information is different from the third color gamut format information, convert a color gamut of the third image into a color gamut corresponding to the third color gamut format information, to obtain the fourth image.

According to any one of the first aspect or the foregoing implementations of the first aspect, the second format information includes a second optical-electro transfer function, and the third format information includes a third optical-electro transfer function; and the encoder is specifically configured to: when the second optical-electro transfer function is different from the third optical-electro transfer function, convert the third image based on an electro-optical transfer function corresponding to the second optical-electro transfer function, to obtain a fifth image; and convert the fifth image based on the third optical-electro transfer function to obtain the fourth image.

For example, the optical-electro transfer function (Optical-Electro Transfer Function, OETF) is used to convert a linear signal into a nonlinear signal, and may include but is not limited to a gamma (Gamma) optical-electro transfer function, a perception quantization (Perception Quantization, PQ) optical-electro transfer function, a hybrid log-gamma (Hybrid Log-Gamma, HLG) optical-electro transfer function, a scene luminance fidelity (Scene Luminance Fidelity, SLF) optical-electro transfer function, and the like. This is not limited in this application.

For example, the electro-optical transfer function is an inverse function of the optical-electro transfer function, and may be used to convert a nonlinear signal into a linear signal. The electro-optical transfer function may include but is not limited to a gamma (Gamma) electro-optical transfer function, a perception quantization (Perception Quantization, PQ) electro-optical transfer function, a hybrid log-gamma (Hybrid Log-Gamma, HLG) electro-optical transfer function, a scene luminance fidelity (Scene Luminance Fidelity, SLF) electro-optical transfer function, and the like. This is not limited in this application.

According to any one of the first aspect or the foregoing implementations of the first aspect, the second format information includes second color gamut format information and a second optical-electro transfer function, and the third format information includes third color gamut format information and a third optical-electro transfer function; and the encoder is specifically configured to: when the second color gamut format information is different from the third color gamut format information and the second optical-electro transfer function is different from the third optical-electro transfer function, convert the third image based on an electro-optical transfer function corresponding to the second optical-electro transfer function, to obtain a fifth image; convert a color gamut of the fifth image into a color gamut corresponding to the third color gamut format information, to obtain a sixth image; and convert the sixth image based on the third optical-electro transfer function to obtain the fourth image.

According to any one of the first aspect or the foregoing implementations of the first aspect, the decoder is further configured to: obtain first check information; and embed the first check information into the second image; and the encoder is further configured to: determine second check information based on information extracted from the third image; obtain third check information; and when the second check information matches the third check information, determine the second format information based on the third image.

For example, when the second check information does not match the third check information, the third image may be encoded to obtain a third bitstream, and the third bitstream is sent to the application.

It should be noted that editing the second image may damage the first format information embedded into the second image. Therefore, the second format information may be the same as or different from the first format information. In this way, during encoding, whether the first format information in the second image is damaged can be determined based on the second check information. When the second check information does not match the third check information, it can be determined that the first format information in the second image is damaged, to be specific, the first format information is different from the second format information. In this case, the third image may be directly encoded. When the second check information matches the third check information, it can be determined that the first format information in the second image is not damaged, to be specific, the first format information is the same as the second format information. In this case, format conversion may be performed on the third image to obtain the fourth image, and then the fourth image is encoded.

When the first format information is damaged due to editing performed by the application on the second image, format conversion cannot be correctly performed on the third image. Further, when it is determined, during checking on the third image based on the second check information, that the first format information is damaged, the third image is directly encoded. This can save computing power of the encoder, and reduce time used for transcoding. Alternatively, when it is determined, during checking on the third image based on the second check information, that the first format information is not damaged, format conversion can be correctly performed on the third image. Further, format conversion may be performed on the third image, and then a format-converted third image (that is, the fourth image) is encoded. This can improve quality of an image obtained by the receive end through decoding.

For example, for a manner of embedding the first check information into the second image, refer to the manner of embedding the first format information into the first image. Details are not described herein again.

For example, when the first check information itself has been embedded into the second image, the second check information may be directly extracted from the third image; or when an index value of the first check information has been embedded into the second image, the index value may be extracted from the third image, and then a check information set is searched based on the index value, to determine the second format information.

For example, editing the second image may alternatively damage the first check information. Therefore, the second check information determined based on the third image may be the same as or different from the first check information.

For example, in this application, first specified information, for example, a preset value or a preset character string, may be embedded into the second image. The encoder and the decoder may pre-agree upon the first specified information, so that the encoder can determine whether the first check information is damaged.

For example, second specified information may be extracted from the third image. When the first specified information is the same as the second specified information, it can be determined that the first check information is not damaged, to be specific, the first check information is the same as the second check information. In this case, the third check information may be obtained. When the first specified information is different from the second specified information, it can be determined that the first check information is damaged, to be specific, the first check information is different from the second check information. In this case, the third image may be directly encoded to obtain the third bitstream.

According to any one of the first aspect or the foregoing implementations of the first aspect, the decoder is specifically configured to: perform calculation based on a pixel value of the first image, to determine the first check information; and the encoder is specifically configured to: perform calculation based on a pixel value of the third image, to determine the third check information.

For example, calculation is performed based on the pixel value of the first image, to determine average luminance information (or maximum/minimum luminance information) of the first image, and the average luminance information (or the maximum/minimum luminance information) of the first image is determined as the first check information. In addition, calculation is performed based on the pixel value of the third image, to determine average luminance information (or maximum/minimum luminance information) of the third image, and the average luminance information (or the maximum/minimum luminance information) of the third image is determined as the third check information.

For example, calculation is performed based on the pixel value of the first image, to determine a luminance histogram of the first image, and the first check information is determined based on a feature point in the luminance histogram of the first image. In addition, calculation is performed based on the pixel value of the third image, to determine a luminance histogram of the third image, and the third check information is determined based on a feature point in the luminance histogram of the third image.

According to any one of the first aspect or the foregoing implementations of the first aspect, the decoder is further configured to: embed a first preset identifier into the second image, where the first preset identifier indicates whether the first format information is embedded into the second image; and the encoder is further configured to: determine a second preset identifier based on the third image; and when a value of the second preset identifier is a first preset value, determine the second format information based on the third image; or when a value of the second preset identifier is a second preset value, encode the third image to obtain the third bitstream, and send the third bitstream to the application.

In this way, when the decoder has not embedded the first format information into the first image or has failed to embed the first format information into the first image, the encoder may directly encode the third image without determining the second format information based on the third image. This can reduce invalid operations, save computing power of the encoder, and reduce time used for transcoding.

For example, for a manner of embedding the first preset identifier into the second image, refer to the manner of embedding the first format information into the first image. Details are not described herein again.

For example, editing the image may alternatively damage the first preset identifier. Therefore, in this application, first specified information, for example, a preset value or a preset character string, may be embedded into the second image. The encoder and the decoder may pre-agree upon the first specified information, so that the encoder can determine whether the first preset identifier is damaged.

When the first specified information is the same as second specified information, it can be determined that the first preset identifier is not damaged, to be specific, the first preset identifier is the same as the second preset identifier. In this case, whether the first format information is embedded into the third image can be determined. When the first specified information is different from second specified information, it can be determined that the first preset identifier is damaged, to be specific, the first preset identifier is different from the second preset identifier. In this case, the third image may be directly encoded to obtain the third bitstream.

It should be understood that, if the first check information and the first preset identifier are embedded into the second image, when the value of the second preset identifier is the first preset value and the second check information matches the third check information, the second format information is determined based on the third image, format conversion is performed on the third image based on the second format information and the third format information to obtain the fourth image, the fourth image is encoded to obtain the second bitstream, and then the second bitstream is sent to the application. When the value of the second preset identifier is the second preset value or the second check information does not match the third check information, the third image is encoded to obtain the third bitstream, and the third bitstream is sent to the application.

According to any one of the first aspect or the foregoing implementations of the first aspect, the second format information includes second color gamut format information and/or a second optical-electro transfer function, and the third format information includes third color gamut format information and/or a third optical-electro transfer function.

According to any one of the first aspect or the foregoing implementations of the first aspect, the first check information includes luminance information.

For example, the luminance information may be preset luminance information, or may be luminance information, such as average luminance information, maximum luminance information, or minimum luminance information, of the first image. This is not limited in this application.

According to a second aspect, an embodiment of this application provides a transcoding method. The method includes: first, obtaining a first bitstream; then decoding the first bitstream to obtain a first image and first format information of the first image; then embedding the first format information into the first image to obtain a second image; then obtaining a third image, where the third image is the second image or an edited second image; then determining second format information based on the third image, and obtaining preconfigured third format information; performing format conversion on the third image based on the second format information and the third format information to obtain a fourth image; and encoding the fourth image to obtain a second bitstream.

According to the second aspect, embedding the first format information into the first image to obtain the second image includes: selecting a target area from the first image, where an overlapping part exists between an edge of the target area and an edge of the first image, and a size of the target area is less than a size of the first image; and embedding the first format information into the target area of the first image to obtain the second image.

According to any one of the second aspect or the foregoing implementations of the second aspect, embedding the first format information into the target area of the first image to obtain the second image includes: determining a first index value of the first format information; and embedding the first index value of the first format information into the target area of the first image to obtain the second image.

According to any one of the second aspect or the foregoing implementations of the second aspect, embedding the first index value of the first format information into the target area of the first image to obtain the second image includes: replacing pixel values of all or some of pixels included in the target area with the first index value of the first format information.

According to any one of the second aspect or the foregoing implementations of the second aspect, determining the second format information based on the third image includes: extracting a second index value from the third image; and determining the second format information based on the second index value.

According to any one of the second aspect or the foregoing implementations of the second aspect, the second format information includes second color gamut format information, and the third format information includes third color gamut format information; and performing format conversion on the third image based on the second format information and the third format information to obtain the fourth image includes: when the second color gamut format information is different from the third color gamut format information, converting a color gamut of the third image into a color gamut corresponding to the third color gamut format information, to obtain the fourth image.

According to any one of the second aspect or the foregoing implementations of the second aspect, the second format information includes a second optical-electro transfer function, and the third format information includes a third optical-electro transfer function; and performing format conversion on the third image based on the second format information and the third format information to obtain the fourth image includes: when the second optical-electro transfer function is different from the third optical-electro transfer function, converting the third image based on an electro-optical transfer function corresponding to the second optical-electro transfer function, to obtain a fifth image; and converting the fifth image based on the third optical-electro transfer function to obtain the fourth image.

According to any one of the second aspect or the foregoing implementations of the second aspect, the second format information includes second color gamut format information and a second optical-electro transfer function, and the third format information includes third color gamut format information and a third optical-electro transfer function; and performing format conversion on the third image based on the second format information and the third format information to obtain the fourth image includes: when the second color gamut format information is different from the third color gamut format information and the second optical-electro transfer function is different from the third optical-electro transfer function, converting the third image based on an electro-optical transfer function corresponding to the second optical-electro transfer function, to obtain a fifth image; converting a color gamut of the fifth image into a color gamut corresponding to the third color gamut format information, to obtain a sixth image; and converting the sixth image based on the third optical-electro transfer function to obtain the fourth image.

According to any one of the second aspect or the foregoing implementations of the second aspect, the method further includes: obtaining first check information; embedding the first check information into the second image; determining second check information based on information extracted from the third image; obtaining third check information; and when the second check information matches the third check information, determining the second format information based on the third image.

According to any one of the second aspect or the foregoing implementations of the second aspect, obtaining the first check information includes: performing calculation based on a pixel value of the first image, to determine the first check information; and obtaining the third check information includes: performing calculation based on a pixel value of the third image, to determine the third check information.

According to any one of the second aspect or the foregoing implementations of the second aspect, the method further includes: embedding a first preset identifier into the second image, where the first preset identifier indicates whether the first format information is embedded into the second image; determining a second preset identifier based on the third image; and when a value of the second preset identifier is a first preset value, determining the second format information based on the third image; or when a value of the second preset identifier is a second preset value, encoding the third image to obtain the third bitstream, and sending the third bitstream to the application.

According to any one of the second aspect or the foregoing implementations of the second aspect, the second format information includes second color gamut format information and/or a second optical-electro transfer function, and the third format information includes third color gamut format information and/or a third optical-electro transfer function.

According to any one of the second aspect or the foregoing implementations of the second aspect, the first check information includes luminance information.

Any one of the second aspect or the implementations of the second aspect respectively corresponds to any one of the first aspect or the implementations of the first aspect. For technical effect corresponding to any one of the second aspect or the implementations of the second aspect, refer to technical effect corresponding to any one of the first aspect or the implementations of the first aspect. Details are not described herein again.

According to a third aspect, an embodiment of this application provides an electronic device, including a memory and a processor. The memory is coupled to the processor. The memory stores program instructions. When the program instructions are executed by the processor, the electronic device is enabled to perform the transcoding method according to any one of the second aspect or the possible implementations of the second aspect.

Any one of the third aspect or implementations of the third aspect respectively corresponds to any one of the second aspect or the implementations of the second aspect. For technical effect corresponding to any one of the third aspect or the implementations of the third aspect, refer to technical effect corresponding to any one of the second aspect or the implementations of the second aspect. Details are not described herein again.

According to a fourth aspect, an embodiment of this application provides a chip, including one or more interface circuits and one or more processors. The one or more processors sends/send or receives/receive data through the one or more interface circuits. When the one or more processors executes/execute computer instructions, an electronic device is enabled to perform the transcoding method according to any one of the second aspect or the possible implementations of the second aspect.

Any one of the fourth aspect or implementations of the fourth aspect respectively corresponds to any one of the second aspect or the implementations of the second aspect. For technical effect corresponding to any one of the fourth aspect or the implementations of the fourth aspect, refer to technical effect corresponding to any one of the second aspect or the implementations of the second aspect. Details are not described herein again.

According to a fifth aspect, an embodiment of this application provides a computer-readable storage medium. The computer-readable storage medium stores a computer program. When the computer program is run on a computer or a processor, the computer or the processor is enabled to perform the transcoding method according to any one of the second aspect or the possible implementations of the second aspect.

Any one of the fifth aspect or implementations of the fifth aspect respectively corresponds to any one of the second aspect or the implementations of the second aspect. For technical effect corresponding to any one of the fifth aspect or the implementations of the fifth aspect, refer to technical effect corresponding to any one of the second aspect or the implementations of the second aspect. Details are not described herein again.

According to a sixth aspect, an embodiment of this application provides a computer program product. The computer program product includes computer instructions. When the computer instructions are executed by a computer or a processor, the computer or the processor is enabled to perform the transcoding method according to any one of the second aspect or the possible implementations of the second aspect.

Any one of the sixth aspect or implementations of the sixth aspect respectively corresponds to any one of the second aspect or the implementations of the second aspect. For technical effect corresponding to any one of the sixth aspect or the implementations of the sixth aspect, refer to technical effect corresponding to any one of the second aspect or the implementations of the second aspect. Details are not described herein again.

**BRIEF DESCRIPTION OF DRAWINGS**

FIG. 1a(1), FIG. 1a(2), FIG. 1a(3), and FIG. 1a(4) are a diagram of an example application scenario;
FIG. 1b is a diagram of an example structure of a terminal device;
FIG. 2a is a diagram of an example transcoding process;
FIG. 2b is a diagram of an example end-to-end process of a bitstream;
FIG. 3a is a schematic line graph of an example PQ optical-electro transfer function;
FIG. 3b is a schematic line graph of an example HLG optical-electro transfer function;
FIG. 3c is a schematic line graph of an example SLF optical-electro transfer function;
FIG. 4a is a diagram of an example transcoding process;
FIG. 4b is a diagram of example edge areas;
FIG. 5 is a diagram of an example transcoding process;
FIG. 6A and FIG. 6B are a diagram of an example transcoding process;
FIG. 7 is a diagram of an example format conversion process;
FIG. 8 is a diagram of an example format conversion process;
FIG. 9 is a diagram of an example format conversion process; and
FIG. 10 is a diagram of an example structure of an apparatus.

**DESCRIPTION OF EMBODIMENTS**

The following clearly and completely describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may indicate the following three cases: Only A exists, both A and B exist, and only B exists.

In this specification and the claims of embodiments of this application, the terms "first", "second", and the like are intended to distinguish between different objects, but not to indicate a specific order of the objects. For example, a first target object and a second target object are intended to distinguish between different target objects, but not to indicate a specific order of the target objects.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner.

In descriptions of embodiments of this application, "a plurality of" means two or more, unless otherwise specified. For example, a plurality of processing units are two or more processing units, and a plurality of systems are two or more systems.

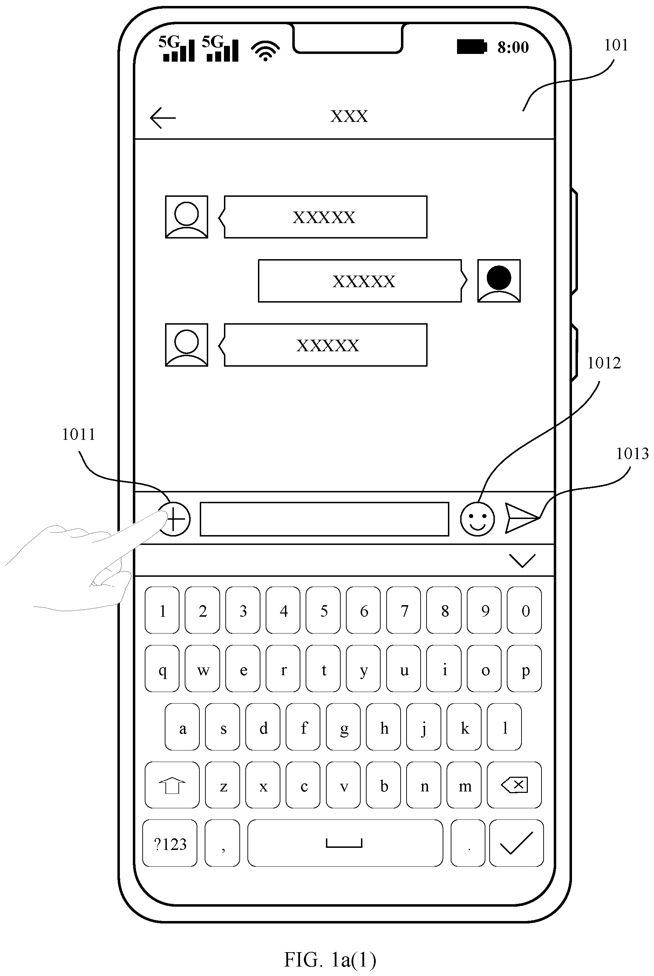

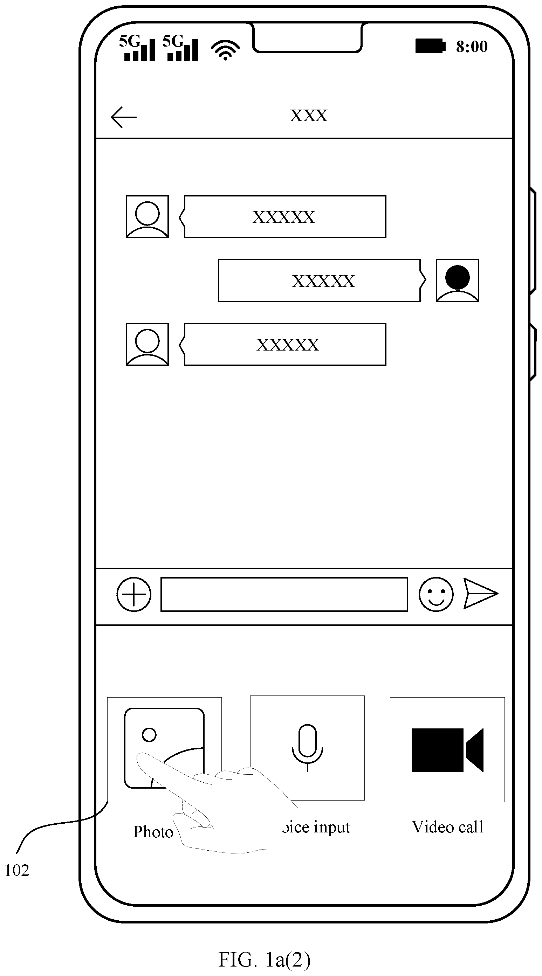

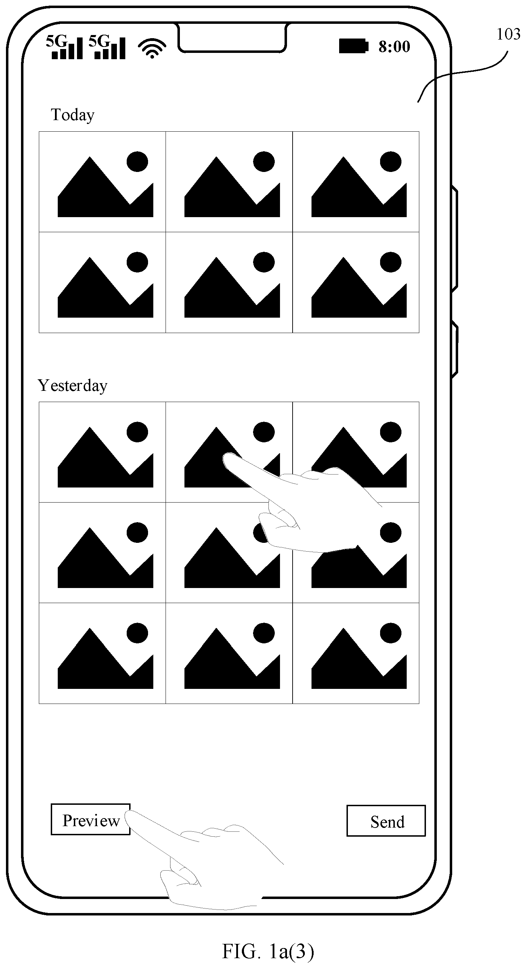

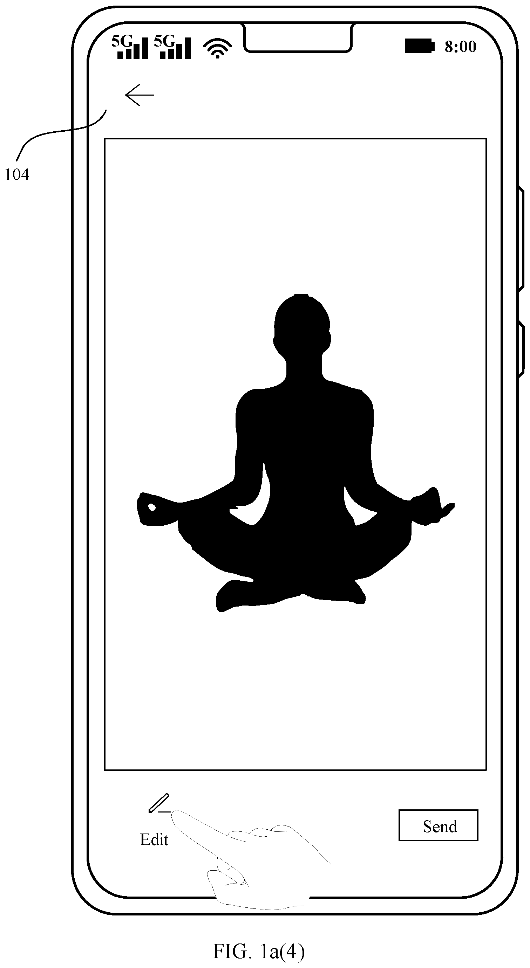

FIG. 1a(1), FIG. 1a(2), FIG. 1a(3), and FIG. 1a(4) are a diagram of an example application scenario.

Refer to FIG. 1a(1). For example, a chat interface 101 of instant messaging software may include one or more controls. For example, the chat interface 101 may include but is not limited to an add option 1011, an emoticon option 1012, a send option 1013, a keypad, and the like. This is not limited in this application. In addition, the chat interface 101 includes interaction information and the like.

For example, when a user needs to send a video or an image to a peer end, the user may tap the add option 1011 on the chat interface 101. In this case, in response to the user operation, a mobile phone may cancel displaying of the keypad and display a plurality of add items, as shown in FIG. 1a(2). The add items may include but are not limited to a photo add item 102, a voice input add item, a video call add item, and the like. This is not limited in this application. Then the user may tap the photo add item 102. In this case, in response to the user operation, the mobile phone may display an image selection interface 103, as shown in FIG. 1a(3). The image selection interface 103 includes a thumbnail of an image in a gallery of the mobile phone and/or a thumbnail of a video cover. The user may select a thumbnail from the image selection interface 103, to select an image or a video that needs to be sent. In addition, the image selection interface 103 may include a plurality of controls, for example, a preview option and a send option.

For example, after the user selects an image (or a video), if the user needs to preview or edit the selected image (or video), the user may tap the preview option on the image selection interface 103. In response to the user operation, the mobile phone may enter a preview interface 104, as shown in FIG. 1a(4). The preview interface 104 displays the image (or video) selected by the user, and includes a plurality of controls, for example, an edit option and a send option. When the user needs to edit (for example, add text, add a filter, perform rotation, or perform zooming) the selected image (or video), the user may tap the edit option. In this case, the mobile phone may enter an editing interface (not shown in FIG. 1a) in response to the user operation. Then the mobile phone may perform editing in response to an editing operation of the user. After the user completes editing, the mobile phone may re-display the preview interface 104. Then the user may tap a send option on the preview interface 104. In response to the user operation, the mobile phone may send an edited image (or video) to the peer end. When the user does not need to edit the selected image (or video), the user may tap the send option on the preview interface 104. In response to the user operation, the mobile phone may send the image (or video) selected by the user to the peer end.

For example, after the user selects an image (or a video), if the user does not need to preview or edit the selected image (or video), the user may tap the send option on the image selection interface 103. In response to the user operation, the mobile phone may send the image (or video) selected by the user to the peer end.

For example, when a format of an image (or a video) that can be displayed at a receive end is different from a format of an image (or a video) sent by a transmit end, if the receive end does not support transcoding or a server does not support transcoding, the transmit end needs to perform transcoding. Alternatively, when a format of an image (or a video) that can be encoded by an encoder at a transmit end is different from a format of an image (or a video) selected by a user at the transmit end, the transmit end also needs to perform transcoding. The transcoding may be: converting an image (or a video) from one format to another format.

This application provides a transcoding apparatus (the transcoding apparatus is deployed at a transmit end), to correctly perform transcoding in a process of sending an image (or a video), to ensure quality of an image obtained by a receive end through decoding.

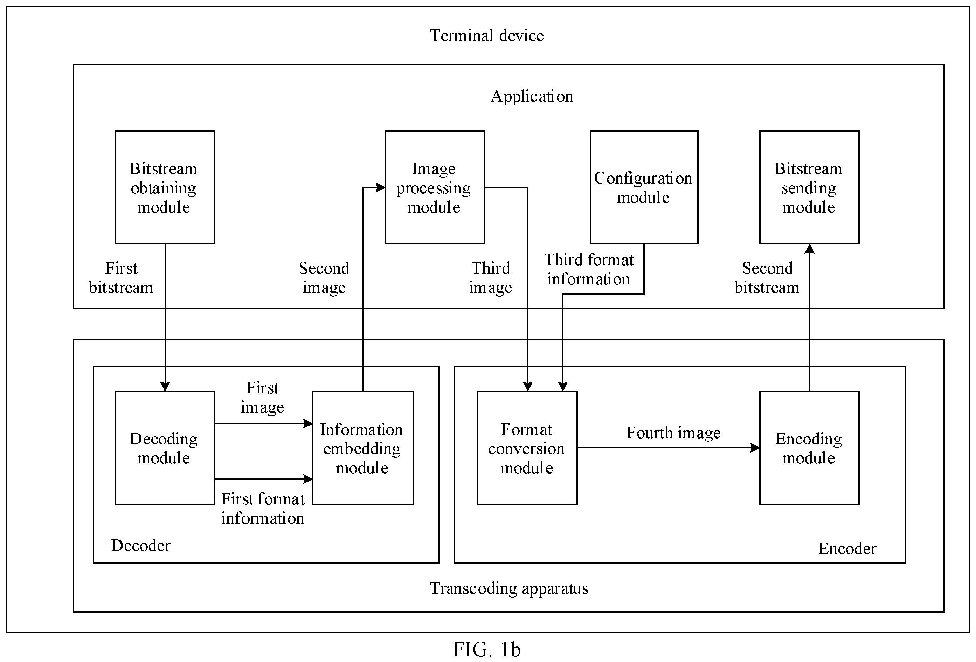

FIG. 1b is a diagram of an example structure of a terminal device. The terminal device may include an application and a transcoding apparatus, and the transcoding apparatus may include an encoder and a decoder.

It should be understood that FIG. 1b is merely an example of this application, the transcoding apparatus may include more components than those shown in FIG. 1b, and the terminal device may include more applications or apparatuses than those shown in FIG. 1b. This is not limited in this application.

Still refer to FIG. 1b. For example, the decoder may include a decoding module and an information embedding module. The decoding module may be configured to obtain, through decoding, information carried in a bitstream. The information embedding module may be configured to embed information into an image. It should be understood that the decoding module and the information embedding module may be two independent modules, or may be a whole (to be specific, the decoder is not divided). This is not limited in this application. In addition, the decoder may be a software decoder or a hardware decoder. This is not limited in this application. The decoding module may be implemented by using hardware or software (for example, software code in a processor). The information embedding module may be implemented by using hardware or software (for example, software code in a processor).

It should be noted that the decoder in this application may be obtained by packaging a decoder in the conventional technology and an information embedding module (newly developed in this application) as a whole. In this case, the decoder in the conventional technology is the foregoing decoding module. Alternatively, the decoder in this application may be obtained by integrating a newly developed decoding module and information embedding module. This is not limited in this application.

Still refer to FIG. 1b. For example, the encoder may include an encoding module and a format conversion module. The encoding module may be configured to encode an image to obtain a bitstream. The format conversion module may be configured to convert an image from one format to another format. It should be understood that the encoding module and the format conversion module may be two independent modules, or may be a whole (to be specific, the encoder is not divided). This is not limited in this application. In addition, the encoder may be a software encoder or a hardware encoder. This is not limited in this application. The encoding module may be implemented by using hardware or software (for example, software code in a processor). The format conversion module may be implemented by using hardware or software (for example, software code in a processor).

It should be noted that the encoder in this application may be obtained by packaging an encoder in the conventional technology and a format conversion module (newly developed in this application) as a whole. In this case, the encoder in the conventional technology is the foregoing encoding module. Alternatively, the encoder in this application may be obtained by integrating a newly developed encoding module and format conversion module. This is not limited in this application.

Still refer to FIG. 1b. For example, the application may include a bitstream obtaining module, an image processing module, a configuration module, and a bitstream sending module. The image processing module may be configured to process (for example, edit) an image based on preconfiguration of the application or an editing operation of a user. The configuration module may be configured to configure the encoder, for example, configure a format of a to-be-encoded image. It should be understood that FIG. 1b is merely an example of this application, and the application may include more or fewer modules than those shown in FIG. 1b. This is not limited in this application. In addition, any two or more of the bitstream obtaining module, the image processing module, the configuration module, and the bitstream sending module may be a whole or independent modules. This is not limited in this application.

It should be noted that the transcoding apparatus (including the encoder and the decoder) in this application is a part of an operating system, and is provided by the operating system instead of the application. To be specific, a transcoding method in this application is performed by the operating system without depending on the application. In this way, even if the application does not have a transcoding function, the application can invoke the transcoding apparatus in the operating system to implement transcoding. This reduces complexity of developing the application and a function requirement for the application. In addition, the operating system can be compatible with more applications.

The transcoding method in this application is described below by using examples based on the transcoding apparatus shown in FIG. 1b.

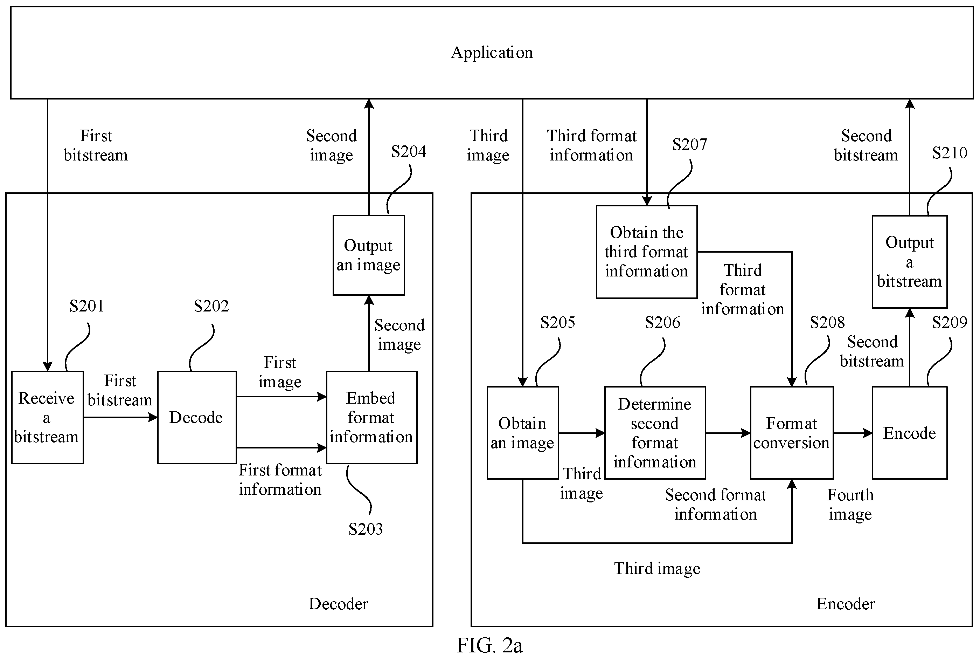

FIG. 2a is a diagram of an example transcoding process. The transcoding process may include a decoding process and an encoding process. In the embodiment of FIG. 2a, transcoding a frame of image in a video is used as an example for description.

S201: The decoder receives a first bitstream output by the application.

Refer to FIG. 1a(3) again. For example, after a user selects a video on the image selection interface 103, when the user taps the preview option or the send option on the image selection interface 103, in response to the user operation, the application may read, from a storage location corresponding to the video selected by the user, a bitstream of the video (subsequently referred to as the first bitstream), and then output the first bitstream to the decoder. In this way, the decoder can receive the first bitstream.

In a possible manner, the first bitstream may be a video stream generated by an image capture module of the terminal device. For example, in a process in which the user uses the terminal device to record a video, the image capture module encodes the video while capturing the video, to obtain the first bitstream.

In a possible manner, the first bitstream may be a video stream received by the application from another terminal device.

In a possible manner, the first bitstream may be a video stream downloaded by the terminal device from a social platform, a video platform, or the like.

It should be understood that a source of the first bitstream is not limited in this application.

For example, during generation of the first bitstream, format information of the video may be added to the first bitstream. The format information may include but is not limited to a timestamp, a frame rate, a resolution, color gamut format information, an optical-electro transfer function (Optical-Electro Transfer Function, OETF), where the optical-electro transfer function may be used to convert a linear signal into a nonlinear signal, and this is described subsequently), metadata (Metadata), and other information. This is not limited in this application. The metadata may include but is not limited to an average luminance value, a minimum luminance value, a maximum luminance value, and the like. This is not limited in this application.

S202: The decoder decodes the first bitstream to obtain a first image and first format information of the first image.

For example, after the decoder receives the first bitstream, the decoding module may decode the first bitstream to obtain an image (subsequently referred to as the first image) and the first format information of the first image. For example, the first format information includes at least first color gamut format information and/or a first optical-electro transfer function. It should be understood that the first format information may further include other format information. This is not limited in this application.

S203: The decoder embeds the first format information into the first image to obtain a second image.

In a possible manner, when the decoder is a software decoder, the decoding module may output the first image and the first format information of the first image to the information embedding module. In this way, the information embedding module can obtain the first image and the first format information of the first image.

In a possible manner, when the decoder is a hardware decoder, the decoding module may output the first image and the first format information of the first image to a buffer. In this case, the information embedding module may read the first image and the first format information of the first image from the buffer.

For example, after obtaining the first image and the first format information of the first image, the information embedding module may embed the first format information into the first image to obtain the second image. A process of embedding the first format information into the first image is described subsequently.

S204: The decoder sends the second image to the application.

For example, after obtaining the second image, the information embedding module may send the second image to the application.

S205: The encoder obtains a third image output by the application, where the third image is the second image or a second image edited by the application.

For example, when the user taps the preview option on the image selection interface 103, the application may display the second image on the preview interface 104 in FIG. 1a(4) for the user to edit. Then the application may edit the second image in response to the user operation. After the user completes encoding and taps the send option on the preview interface 104, the application may output an edited second image to the encoder in response to the user operation.

For example, when the user taps the send option on the image selection interface 103, the application may directly output the second image to the encoder.

For ease of subsequent description, an image output by the application to the encoder may be referred to as the third image. In other words, the third image is the second image or a second image edited by the application.

In this way, the encoder can obtain the third image.

S206: The encoder determines second format information based on the third image.

For example, after the encoder obtains the third image, the format conversion module may determine the second format information based on the third image. Specifically, the second format information may be directly extracted from the third image; or the second format information is obtained by mapping information extracted from the third image. This is specifically related to a manner of embedding the first format information into the first image, and is described subsequently.

For example, when the third image is the second image, the first format information is the same as the second format information. In this case, the following S207 to S209 may be performed.

For example, when the third image is an edited second image, because editing the second image may damage the first format information in the second image, whether the first format information is damaged may be first determined. When it is determined that the first format information is damaged, it can be determined that the first format information is different from the second format information. In this case, the third image may be directly encoded to obtain a third bitstream. In other words, no format conversion needs to be performed. When it is determined that the first format information is not damaged, it can be determined that the first format information is the same as the second format information. In this case, the following S207 to S209 are performed.

S207: Obtain preconfigured third format information.

For example, the configuration module of the application may preconfigure expected format information of an encoded image, where the format information configured by the configuration module may be referred to as the third format information. In this way, after the encoder obtains the third image, the format conversion module can obtain the third format information from the configuration module of the application. The third format information may include third color gamut format information and/or a third optical-electro transfer function. It should be understood that the third format information may further include other format information. This is not limited in this application. For example, a format information type included in the third format information may be the same as a format information type included in the second format information.

It should be noted that a sequence of performing S206 and S207 is not limited in this application.

S208: The encoder performs format conversion on the third image based on the second format information and the third format information to obtain a fourth image.

For example, the format conversion module may perform format conversion on the third image based on the second format information and the third format information, to convert the third image from a format corresponding to the second format information into a format corresponding to the third format information, to obtain the fourth image.

S209: The encoder encodes the fourth image to obtain a second bitstream.

S210: The encoder outputs the second bitstream to the application.

For example, after completing format conversion to obtain the fourth image, the format conversion module may output the fourth image to the encoding module, and then the encoding module encodes the fourth image to obtain the second bitstream, and sends the second bitstream to the application. Specifically, the encoder may send the second bitstream to the bitstream sending module of the application, and then the bitstream sending module of the application may send the second bitstream.

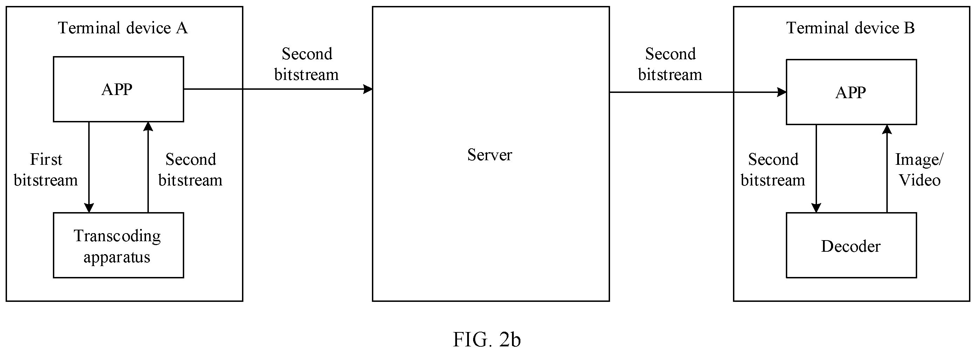

FIG. 2b is a diagram of an example end-to-end process of a bitstream.

Refer to FIG. 2b. For example, a terminal device A includes a transcoding apparatus. The transcoding apparatus performs S201 to S210 to transcode a first bitstream into a second bitstream. Then an APP on the terminal device A sends the second bitstream. After receiving the second bitstream, a server of the APP may send the second bitstream to a terminal device B. In this way, an APP on the terminal device B may receive the second bitstream. Then the APP on the terminal device B may output the second bitstream to a decoder. After decoding the second bitstream, the decoder outputs an image or a video to the APP. In this case, the APP on the terminal device B may play the video or display the image.

The following first describes an optical-electro transfer function.

For example, the optical-electro transfer function may include but is not limited to a gamma (Gamma) optical-electro transfer function, a perception quantization (Perception Quantization, PQ) optical-electro transfer function, a hybrid log-gamma (Hybrid Log-Gamma, HLG) optical-electro transfer function, a scene luminance fidelity (Scene Luminance Fidelity, SLF) optical-electro transfer function, and the like. This is not limited in this application.

The gamma optical-electro transfer function is as follows:

$$V = \begin{cases} 1.099L^{0.45}\text{-}0.099 \ for \ 1 \ge L \ge 0.018 \\ 4.500 \ for \ 0.018 \ge L \ge 0 \end{cases} \quad (1),$$

where
L is a linear signal value (which may be R, G, or B) of an image pixel, and V is a nonlinear signal value (which may be R', G', or B') of the image pixel.

The PQ optical-electro transfer function is as follows:

$$L^{'} = PQ\_TF(L) = \left( \frac{c_1 + c_2 L^{m_1}}{1 + c_3 L^{m_1}} \right)^{m_2} \quad (2),$$

where PQ_TF( ) is the PQ optical-electro transfer function, L is a linear signal value (which may be R, G, or B) of an image pixel, a value of L is normalized to [0, 1], L is a nonlinear signal value (which may be R', G', or B') of the image pixel, and a value range of a value of L is [0, 1]; $m_1 = \frac{2610}{4096} \times \frac{1}{4} = 0.1593017578125$ , where $m_1$ is a PQ optical-electro transfer coefficient; $m_2 = \frac{2523}{4096} \times 128 = 78.84375$ , where $m_2$ is a PQ optical-electro transfer coefficient;

$c_1 = c_3 - c_2 + 1 = \frac{3424}{4096} = 0.8359375$ , where $c_1$ is a PQ optical-electro transfer coefficient;

$c_2 = \frac{2413}{4096} \times 32 = 18.8515625$ , where $c_2$ is a PQ optical-electro transfer coefficient; and

$c_3 = \frac{2392}{4096} \times 32 = 18.6875$ , where $c_3$ is a PQ optical-electro transfer coefficient.

Based on the formula (2), refer to a formula (3). The linear signal value of the image pixel is converted into a nonlinear signal value:

$$\begin{cases} R^{'} = PQ\_TF\left( \max\left( 0, \min\left( R/10000,1 \right) \right) \right) \\ G^{'} = PQ\_TF\left( \max\left( 0, \min\left( G/10000,1 \right) \right) \right) \\ B^{'} = PQ\_TF\left( \max\left( 0, \min\left( B/10000,1 \right) \right) \right) \end{cases} \quad (3),$$

where
R, G, and B are pixel values of a to-be-converted image pixel, and *R'*, *G'*, and *B'* are pixel values of an image pixel obtained through conversion.

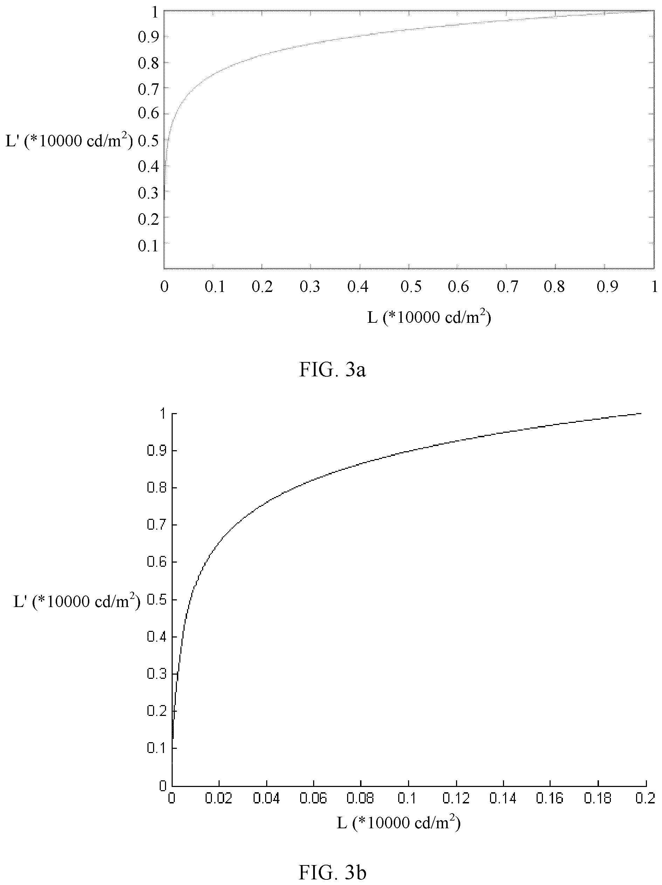

FIG. 3a is a schematic line graph of an example PQ optical-electro transfer function. In FIG. 3a, a horizontal coordinate is a linear signal value of an image pixel, and a vertical coordinate is a nonlinear signal value of the image pixel. A curve in FIG. 3a is a curve corresponding to the formula (2), namely, a curve of the PQ optical-electro transfer function, and may describe a conversion relationship between a linear signal value of an image pixel and a PQ-domain nonlinear signal value.

The HLG optical-electro transfer function is as follows:

$$L^{'} = HLG\_TF(L) = \begin{cases} \sqrt{L}/2, 0 \le L \le 1 \\ a\ln(L-b)+c, 1 < L \end{cases} \quad (4),$$

where

HLG_TF( ) represents the HLG optical-electro transfer function, L is a linear signal value (which may be R, G, or B) of an image pixel, a value range of L is [0, 12], L' is a nonlinear signal value (which may be R', G', or B') of the image pixel, and a value range of L is [0, 1]; a=0.17883277, where a is an HLG optical-electro transfer coefficient; b=0.28466892, where b is an HLG optical-electro transfer coefficient; and c=0.55991073, where c is an HLG optical-electro transfer coefficient.

FIG. 3b is a schematic line graph of an example HLG optical-electro transfer function. In FIG. 3b, a horizontal coordinate is a linear signal value of an image pixel, and a vertical coordinate is a nonlinear signal value of the image pixel. A curve in FIG. 3b is a curve corresponding to the formula (4), namely, a curve of the HLG optical-electro transfer function, and may describe a conversion relationship between a linear signal value of an image pixel and an HLG-domain nonlinear signal value.

The SLF optical-electro transfer function is as follows:

$$L^{'} = SLF\_TF(L) = a \times \left( \frac{p \times L}{(p-1) \times L} \right)^{m} + b \quad (5),$$

where

SLF_TF( ) represents the SLF optical-electro transfer function, L is a linear signal value (which may be R, G, or B) of an image pixel, a value of L is normalized to [0, 1], L is a nonlinear signal value (which may be R', G', or B') of the image pixel, and a value range of L is [0, 1]; p=2.3, where p is an SLF optical-electro transfer coefficient; m=0.14, where m is an SLF optical-electro transfer coefficient; a=1.12762, where a is an SLF optical-electro transfer coefficient; and b=-0.12762, where b is an SLF optical-electro transfer coefficient.

Based on the formula (5), refer to a formula (6). The linear signal value of the image pixel is converted into a nonlinear signal value:

$$\begin{cases} R^{'} = SLF\_TF(\max(0, \min(R/10000, 1))) \\ G^{'} = SLF\_TF(\max(0, \min(G/10000, 1))) \\ B^{'} = SLF\_TF(\max(0, \min(B/10000, 1))) \end{cases} \quad (6),$$

where

R, G, and B are pixel values of a to-be-converted image pixel, and R', G', and B' are pixel values of an image pixel obtained through conversion.

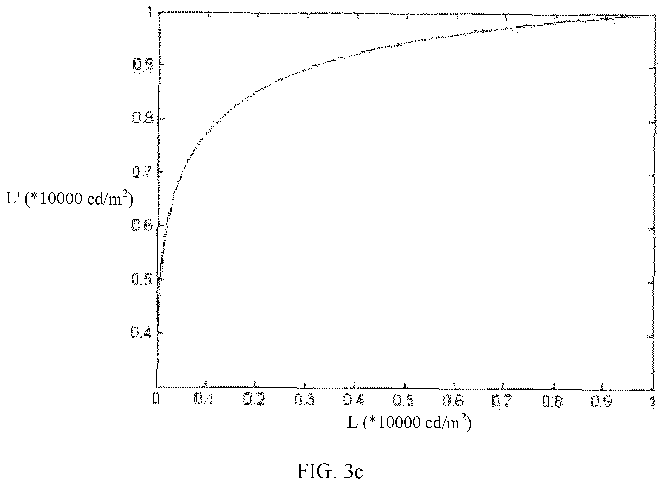

FIG. 3c is a schematic line graph of an example SLF optical-electro transfer function. In FIG. 3c, a horizontal coordinate is a linear signal value of an image pixel, and a vertical coordinate is a nonlinear signal value of the image pixel. A curve in FIG. 3c is a curve corresponding to the formula (5), namely, a curve of the SLF optical-electro transfer function, and may describe a conversion relationship between a linear signal value of an image pixel and an SLF-domain nonlinear signal value.

For example, an electro-optical transfer function (Electro-Optical Transfer Function, EOTF) is an inverse function of the optical-electro transfer function. The electro-optical transfer function may include but is not limited to a gamma electro-optical transfer function, a PQ electro-optical transfer function, an HLG electro-optical transfer function, an SLF electro-optical transfer function, and the like. This is not limited in this application.

In a possible manner, during decoding, first check information may be embedded into the second image. In this way, during encoding, whether the first format information in the second image is damaged can be determined based on the first check information. When the first format information in the second image is damaged, the third image may be directly encoded. When the first format information in the second image is not damaged, the fourth image is encoded after format conversion is performed on the third image to obtain the fourth image.

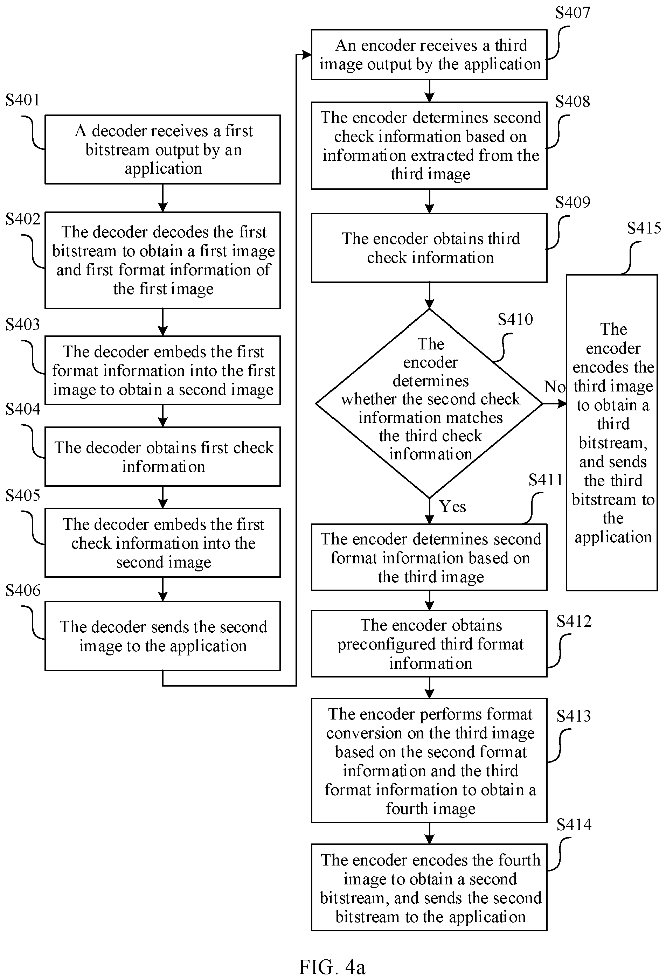

FIG. 4a is a diagram of an example transcoding process. In the embodiment of FIG. 4a, transcoding a frame of image in a video is used as an example for description.

S401: The decoder receives a first bitstream output by the application.

S402: The decoder decodes the first bitstream to obtain a first image and first format information of the first image.

For example, for S401 and S402, refer to the foregoing descriptions of S201 and S202. Details are not described herein again.

S403: The decoder embeds the first format information into the first image to obtain a second image.

For example, S403 may include the following sub-steps S11 and S12.

S11: Select a target area from the first image, where an overlapping part exists between an edge of the target area and an edge of the first image, and a size of the target area is less than a size of the first image.

For example, an edge area in the first image may be first determined. The edge area may be an area that is located at the edge of the first image and whose edge has an overlapping part with the edge of the first image, and a size of the edge area is less than the size of the first image.

FIG. 4b is a diagram of example edge areas. FIG. 4b shows the first image, including four edge areas: an edge area 1, an edge area 2, an edge area 3, and an edge area 4. The size of the first image is $16 \times 16$, sizes of the edge area 1 and the edge area 2 are $2 \times 16$, and sizes of the edge area 3 and the edge area 4 are $2 \times 12$. It should be understood that FIG. 4b is merely an example of this application, and the size of the edge area may be set according to a requirement. This is not limited in this application.

Then the target area may be selected from the edge area, where the size of the target area is less than or equal to the size of the edge area, and an overlapping part exists between the edge of the target area and the edge of the first image.

For example, a quantity of target areas may be determined based on a quantity of types of format information included in the first format information.

In a possible manner, the quantity of target areas is equal to the quantity of types of format information included in the first format information. In this case, one type of format information included in the first format information corresponds to one target area. For example, when the first format information includes first color gamut format information and a first optical-electro transfer function, the quantity of target areas may be 2. To be specific, the first color gamut format information corresponds to one target area, and the first optical-electro transfer function corresponds to one target area.

In a possible manner, the quantity of target areas is greater than the quantity of types of format information included in the first format information. In this case, one type of format information included in the first format information corresponds to at least one target area. For example, when the first format information includes first color gamut format information and a first optical-electro transfer function, the quantity of target areas may be 4. To be specific, the first color gamut format information corresponds to two target areas, and the first optical-electro transfer function corresponds to two target areas.

For example, the size of the target area may be represented by $m \times n$, where n and m are positive integers, and n may be equal to or different from m. This is not limited in this application. For example, when there are a plurality of target areas, sizes of the plurality of target areas may be the same or different. This is not limited in this application.

Assuming that n=m=2 and the first format information includes the first color gamut format information and the first optical-electro transfer function, two $2 \times 2$ target areas, for example, a target area 1 and a target area 2 in FIG. 4b, may be selected.

S12: Embed the first format information into the target area of the first image to obtain the second image.

For example, one type of format information included in the first format information may be embedded into one or more corresponding target areas in the first image.

For example, the first format information includes the first color gamut format information and the first optical-electro transfer function, the first color gamut format information may be embedded into the target area 1 in FIG. 4b, and the first optical-electro transfer function may be embedded into the target area 2 in FIG. 4b. It should be understood that, alternatively, the first color gamut format information may be embedded into the target area 2 in FIG. 4b, and the first optical-electro transfer function may be embedded into the target area 1 in FIG. 4b. Embedding locations of various types of format information included in the first format information are not limited in this application.

In a possible manner, a first index value of the first format information may be determined, and the first index value of the first format information is embedded into the target area of the first image to obtain the second image.

For example, a manner of representing the first index value is not limited in this application. For example, the first index value is represented in a binary form or a decimal form.

For example, a format information set may be pre-established for one type of format information.

For example, a color gamut format information set is established for color gamut format information. The color gamut format information set may include a plurality of pieces of color gamut format information. For example, the color gamut format information set is {BT.2020, BT.709}. The BT.2020 is color gamut format information corresponding to an HDR image, and the BT.709 is color gamut format information corresponding to an SDR image.

For example, an optical-electro transfer function set is established for an optical-electro transfer function. The optical-electro transfer function set may include a plurality of optical-electro transfer functions. For example, the optical-electro transfer function set is {gamma optical-electro transfer function, PQ optical-electro transfer function, HLG optical-electro transfer function, SLF optical-electro transfer function}.

For example, the first index value may be a location index value. A location index value, in a corresponding format information set, of one type of format information included in the first format information may be embedded into one or more target areas of the first image.

For example, the color gamut format information set is {BT.2020, BT.709}, where a location index value of the BT.2020 is "0", and a location index value of the BT.709 is "1". Assuming that the first color gamut format information is the BT.2020, "0" may be embedded into a target area of the first image. Assuming that the first color gamut format information is the BT.709, "1" may be embedded into a target area of the first image.

For example, the optical-electro transfer function set is {gamma optical-electro transfer function, PQ optical-electro transfer function, HLG optical-electro transfer function, SLF optical-electro transfer function}, where a location index value of the gamma optical-electro transfer function is "0", a location index value of the PQ optical-electro transfer function is "1", a location index value of the HLG optical-electro transfer function is "2", and a location index value of the SLF optical-electro transfer function is "3". Assuming that the first optical-electro transfer function is the gamma optical-electro transfer function, "00" may be embedded into a target area of the first image. Assuming that the first optical-electro transfer function is the PQ optical-electro transfer function, "01" may be embedded into a target area of the first image. Assuming that the first optical-electro transfer function is the HLG optical-electro transfer function, "10" may be embedded into a target area of the first image. Assuming that the first optical-electro transfer function is the SLF optical-electro transfer function, "11" may be embedded into a target area of the first image.

For example, the first index value may be a preset index value. For example, a corresponding preset index value may be set for each piece of format information in a format information set. In this case, the format information set may include the format information and the preset index value corresponding to the format information.

For example, the color gamut format information set is {BT.2020 (0), BT.709 (1)}, where "(0)" is a preset index value corresponding to the BT.2020, and "(1)" is a preset index value corresponding to the BT.709.

For another example, the optical-electro transfer function set is {gamma optical-electro transfer function (0), PQ optical-electro transfer function (1), HLG optical-electro transfer function (2), SLF optical-electro transfer function (3)}, where "(0)" is a preset index value corresponding to the gamma optical-electro transfer function, "(1)" is a preset index value corresponding to the PQ optical-electro transfer function, "(2)" is a preset index value corresponding to the HLG optical-electro transfer function, and "(3)" is a preset index value corresponding to the SLF optical-electro transfer function.

In this case, a preset index value, in a corresponding format information set, that corresponds to one type of format information included in the first format information may be embedded into one or more target areas of the first image.

For example, the color gamut format information set is {BT.2020 (0), BT.709 (1)}. Assuming that the first color gamut format information is the BT.2020, "0" may be embedded into a target area of the first image. Assuming that the first color gamut format information is the BT.709, "1" may be embedded into a target area of the first image.

For example, the optical-electro transfer function set is {gamma optical-electro transfer function (0), PQ optical-electro transfer function (1), HLG optical-electro transfer function (2), SLF optical-electro transfer function (3)}. Assuming that the first optical-electro transfer function is the gamma optical-electro transfer function, "0" may be embedded into a target area of the first image. Assuming that the first optical-electro transfer function is the PQ optical-electro transfer function, "1" may be embedded into a target area of the first image. Assuming that the first optical-electro transfer function is the HLG optical-electro transfer function, "2" may be embedded into a target area of the first image. Assuming that the first optical-electro transfer function is the SLF optical-electro transfer function, "3" may be embedded into a target area of the first image.

It should be understood that a format information set may be established for all types of format information. In this case, location index values, in the format information set, of various types of format information included in the first format information, or preset index values, in the format information set, that correspond to various types of format information included in the first format information may be embedded into a target area of the first image.

For example, the first index value of the first format information may be embedded into the target area of the first image in a plurality of manners. In a possible manner, pixel values of all or some of pixels included in the target area are replaced with the first index value of the first format information.

In a possible manner, the first index value of the first format information may be embedded into the target area of the first image in a differential manner.

Assuming that a first index value of one type of format information included in the first format information is represented by a 1-bit binary number, one type of format information included in the first format information may be represented by two target areas. For example, when the first index value of one type of format information included in the first format information is 0, an average luminance value of the 1st target area is set to be greater than an average luminance value of the 2nd target area; or when the first index value of one type of format information included in the first format information is 1, an average luminance value of the 1st target area is set to be less than an average luminance value of the 2nd target area; and vice versa.

Assuming that a first index value of one type of format information included in the first format information is represented by a 2-bit binary number, one type of format information included in the first format information may be represented by four target areas. For example, when the first index value of one type of format information included in the first format information is 10, an average luminance value of the 1st target area is set to be greater than an average luminance value of the 2nd target area, and an average luminance value of the 3rd target area is set to be less than an average luminance value of the 4th target area. Alternatively, when the first index value of one type of format information included in the first format information is 10, an average luminance value of the 1st target area is set to be less than an average luminance value of the 2nd target area, and an average luminance value of the 3rd target area is set to be greater than an average luminance value of the 4th target area.

In a possible manner, a frequency domain component of an image may be set based on the first index value of the first format information, to embed the first index value of the first format information into the target area of the first image. Specifically, the first image is converted to a frequency domain to obtain frequency domain data. Then a plurality of frequency bands may be divided based on the frequency domain data. Then a corresponding quantity of target frequencies may be selected from a frequency band with a highest frequency based on a quantity of binary bits needed by the first index value of the first format information. Then an amplitude of the selected frequency is set based on a binary value corresponding to the first index value of the first format information.

For example, when a first index value of one type of format information included in the first format information is 0, one target frequency may be selected from the frequency band with the highest frequency, and an amplitude of the target frequency is set to 0. When a first index value of one type of format information included in the first format information is 1, one target frequency is selected from the frequency band with the highest frequency, and an amplitude of the target frequency is set to a preset value (other than 0), or an amplitude of the target frequency remains unchanged.

For example, when a first index value of one type of format information included in the first format information is 10, two target frequencies are selected from the frequency band with the highest frequency, and an amplitude of the 1st target frequency is set to a preset value, or an amplitude of the 1st target frequency remains unchanged, and an amplitude of the 2nd target frequency is set to 0.

In a possible manner, a character string corresponding to the first format information may be embedded into the target area of the first image.

It should be understood that another manner of embedding the first format information into the target area of the first image may alternatively be included. This is not limited in this application.

In a possible manner, the decoder may alternatively embed, into the first image, an embedding location of the first format information in the first image.

A first location information set may be pre-established. The first location information set may include coordinates of upper-left corners of target areas, in the first image, into which various types of format information included in the first format information are correspondingly embedded. For example, the first format information includes the first color gamut format information and the first optical-to-electrical transfer function, and the first location information set may be {(0, 0), (4, 0)}, where (0, 0) represents coordinates of an upper-left corner of a target area, in the first image, into which the first color gamut format information is correspondingly embedded, and (4, 0) represents coordinates of an upper-left corner of a target area, in the first image, into which the first optical-to-electrical transfer function is correspondingly embedded. For a specific manner of embedding, into the first image, the embedding location of the first format information in the first image, refer to the foregoing descriptions of embedding the first format information into the first image. Details are not described herein again.

In addition, the decoder may alternatively embed, into the first image, a size of a target area, in the first image, into which the first format information is correspondingly embedded. A first area size information set may be pre-established, and the first area size information set may include sizes of target areas, in the first image, into which various types of format information included in the first format information are correspondingly embedded. For example, the first format information includes the first color gamut format information and the first optical-to-electrical transfer function, and the first area size information set may be {(2, 2)}, where (2, 2) represents a size of a target area, in the first image, into which the first color gamut format information is correspondingly embedded, and also represents a size of a target area, in the first image, into which the first optical-to-electrical transfer function is correspondingly embedded. For a specific manner of embedding, into the first image, the size of the target area, in the first image, into which the first format information is correspondingly embedded, refer to the foregoing descriptions of embedding the first format information into the first image. Details are not described herein again.

In addition, the decoder may alternatively embed the size of the first image into the first image. A first image size information set may alternatively be pre-established, and the first image size information set may include a plurality of sizes. For example, the first image size information set may be {100×100, 240×480, 720×1080}. For a specific manner of embedding the size of the first image into the first image, refer to the foregoing descriptions of embedding the first format information into the first image. Details are not described herein again.

It should be understood that the decoder may alternatively not need to embed, into the first image, the embedding location of the first format information in the first image; not need to embed, into the first image, the size of the target area, in the first image, into which the first format information is correspondingly embedded; and not need to embed the size of the first image into the first image. In this case, the decoder and the encoder only need to pre-agree upon the embedding location of the first format information in the first image, and the size of the target area, in the first image, into which the first format information is correspondingly embedded.

S404: The decoder obtains first check information.

For example, the first check information may be luminance information.

In a possible manner, the first check information is preset luminance information.

In a possible manner, the first check information may be a group of preset luminance information, the group of preset luminance information includes a plurality of luminance values, and an interval between the luminance values may be a first preset luminance interval. For example, the first preset luminance interval may be a preset value. For example, the first preset luminance interval is 25. In this case, the group of preset luminance information may include the following plurality of luminance values: 25, 50, 75, 100, 125, ..., 25×N, ..., and 225. The first preset luminance interval may be set according to a requirement. This is not limited in this application.

In a possible manner, calculation may be performed based on a pixel value of the first image, to determine the first check information.

In a possible manner, the first check information may be a group of luminance information, the group of luminance information includes a plurality of luminance values, and an interval between the luminance values may be a second preset luminance interval. The second preset luminance interval may be determined through calculation based on the pixel value of the first image. For example, an average luminance value determined through calculation based on the pixel value of the first image is used as the preset luminance interval. For another example, a minimum luminance value determined through calculation based on the pixel value of the first image is used as the preset luminance interval. For another example, a maximum luminance value determined through calculation based on the pixel value of the first image is used as the preset luminance interval. This is not limited in this application. For example, the average luminance value determined through calculation based on the pixel value of the first image is used as the preset luminance interval. If the average luminance value of the first image is 80, the group of luminance information may include the following plurality of luminance values: 80, 160, and 240.

In a possible manner, the first check information may be average luminance information of the first image.

For example, the average luminance information may be an average luminance value of an entire frame of image, or an average luminance value of an area of interest, or a weighted average luminance value of a plurality of areas, or an average value obtained through calculation after a luminance histogram is segmented. This is not limited in this application. In addition, a manner of calculating the average luminance information may be calculating an arithmetic average value, a geometric average value, or the like. This is not limited in the present invention.

For example, for a manner of calculating the average luminance information of the first image, refer to the following formula (7):

$$L_{\text{avg}} = \sum_{i=1, j=1}^{width, height} \left( L_{i,j} \right) / \left( width * height \right) \qquad (7),$$

where

$L_{\text{avg}}$ represents the average luminance value, *width* is a width of the first image, *height* is a height of the first image, i and j are pixel coordinates, and L is R, G, B, Y, or Max(R, G, B) of a current pixel.

In a possible manner, the first check information may include maximum luminance information of the first image and minimum luminance information of the first image.

For example, the maximum luminance information of the first image may be calculated based on the following formula (8):

$$\begin{cases} Lum\_i = \max\left( Ri, Gi, Ri \right) \\ Lmax = \max\left( Lum\_0, Lum\_2, ..., Lum\_k - 1 \right) \end{cases} \qquad (8),$$

where

i is a pixel index, k is a total quantity of pixels included in the first image, i is less than k and greater than or equal to 0, *Lum_i* represents a luminance value of a pixel, and Lmax represents the maximum luminance information of the first image.

For example, the maximum luminance information of the first image may be calculated based on the following formula (9):

$$\begin{cases} Lum\_i = a * Ri + b * Gi + c * Ri \\ Lmax = \max\left(Lum\_0, Lum\_2, ..., Lum\_k - 1\right) \end{cases} \quad (9),$$

where

i is a pixel index, k is a total quantity of pixels included in the first image, i is less than k and greater than or equal to 0, *Lum_i* represents a luminance value of a pixel, Lmax represents the maximum luminance information of the first image, and *a*, *b*, and *c* are weighting coefficients, and may be set according to a requirement and are not limited in this application.

It should be understood that *Lum_i* may alternatively be L in Lab (a type of color space), I in ICtCp (a type of color space), or the like, or another luminance calculation manner is used. This is not limited in this application.

In a possible manner, the first check information may be determined based on a luminance histogram obtained by performing calculation on the pixel value of the first image.

For example, the luminance histogram may be segmented by using a preset segmentation algorithm, to obtain one or more segmentation points; and the one or more segmentation points is/are determined as the first check information. For example, the histogram may be divided into two sections, an average luminance value of each of the two sections is calculated, and then a middle location is calculated based on the average luminance values of the two segments; and then the histogram is re-divided based on the middle location. If the middle location changes slightly during two iterations, it is considered that the division is completed. It should be understood that a manner of segmenting the luminance histogram and a quantity of times of segmentation are not limited in this application.

For example, the luminance histogram may be analyzed by using a preset analysis algorithm, to determine a plurality of feature points; and the plurality of feature points are determined as the first check information. For example, a location of a luminance value, in the luminance histogram, that is accumulated from 0 and that reaches a preset percentage may be analyzed and used as a feature point. For another example, frequency domain analysis is performed on the luminance histogram to obtain a main frequency domain coefficient (a preset frequency band may be preset, and a coefficient of a frequency within the preset frequency band is determined as the main frequency domain coefficient) of the luminance histogram, and the main frequency domain coefficient is used as a feature point. For still another example, a local highest location and a local lowest location in the luminance histogram, to be specific, inflection point locations at which a quantity changes in the luminance histogram, may be analyzed; and the inflection point locations are used as feature points.

It should be understood that the first check information may alternatively be determined in another manner. This is not limited in this application.

S405: The decoder embeds the first check information into the second image.

For example, S405 may include the following sub-steps S21 and S22.

S21: Select a target area from the second image, where an overlapping part exists between an edge of the target area and an edge of the second image.

S22: Embed the first check information into the target area of the second image.

A check information set may be pre-established, and a location index value or a preset index value of the first check information in the check set may be determined as a third index value. Then the third index value is embedded into the target area of the second image.

For S21 and S22, refer to the foregoing descriptions of S11 and S12. Details are not described herein again.

It should be noted that the target area selected from the second image and the target area selected from the first image do not overlap.

In a possible manner, the decoder may alternatively embed, into the second image, an embedding location of the first check information in the second image.

A second location information set may be pre-established. The second location information set may include coordinates of an upper-left corner of a target area, in the second image, into which the first check information is correspondingly embedded. For example, the first check information includes the maximum luminance information of the first image and the minimum luminance information of the first image. In this case, the second location information set may be {(8, 0), (12, 0)}, where (8, 0) represents coordinates of an upper-left corner of a target area, in the second image, into which the maximum luminance information of the first image is correspondingly embedded, and (12, 0) represents coordinates of an upper-left corner of a target area, in the second image, into which the minimum luminance information of the first image is correspondingly embedded. For a specific manner of embedding, into the second image, the embedding location of the first check information in the second image, refer to the foregoing descriptions of embedding the first check information into the second image. Details are not described herein again.

In addition, the decoder may alternatively embed, into the second image, a size of a target area, in the second image, into which the first check information is correspondingly embedded. A second area size information set may be pre-established, and the second area size information set may include a size of a target area, in the second image, into which the first check information is correspondingly embedded. For example, the first check information includes the maximum luminance information of the first image and the minimum luminance information of the first image, and the second area size information set may be {(2, 2)}, where (2, 2) represents a size of a target area, in the second image, into which the maximum luminance information of the first image is correspondingly embedded, and also represents a size of a target area, in the second image, into which the maximum luminance information of the first image is correspondingly embedded. For a specific manner of embedding, into the second image, the size of the target area, in the second image, into which the first check information is correspondingly embedded, refer to the foregoing descriptions of embedding the first check information into the second image. Details are not described herein again.

In addition, when the decoder does not embed the size of the first image into the first image, the decoder may alternatively embed a size of the second image into the second image. A second image size information set may alternatively be pre-established, and the second image size information set may include a plurality of sizes. For example, the second image size information set may be {100×100, 240×480, 720×1080}. For a specific manner of embedding the size of the second image into the second image, refer to the foregoing descriptions of embedding the first check information into the second image. Details are not described herein again.

In this way, the decoder and the encoder only need to agree upon an embedding location of the embedding location of the first check information in the second image, an embedding location of the size of the target area of the first check information, and an embedding location of the size of the second image.

It should be understood that the decoder may alternatively not need to embed, into the second image, the embedding location of the first check information in the second image; not need to embed, into the second image, the size of the target area, in the second image, into which the first check information is correspondingly embedded; and not need to embed the size of the second image into the second image. In this case, the decoder and the encoder only need to pre-agree upon the embedding location of the first check information in the second image, and the size of the target area, in the second image, into which the first check information is correspondingly embedded.

S406: The decoder sends the second image to the application.

S407: The encoder receives a third image output by the application, where the third image is the second image or a second image edited by the application.

For example, for S406 and S407, refer to the foregoing descriptions of S204 and S205. Details are not described herein again.

S408: The encoder determines second check information based on information extracted from the third image.

For example, when the decoder has embedded the character string corresponding to the first check information into the second image, the format conversion module of the encoder may extract the second check information from the third image.

For example, when the decoder has embedded the third index value corresponding to the first check information into the second image, the format conversion module of the encoder may extract a fourth index value from the third image, and then perform mapping based on a corresponding check information set and the fourth index value, to determine the second check information.

For example, editing the second image may alternatively damage the first check information. Therefore, the second check information determined based on the information extracted from the third image may be the same as or different from the first check information.

For example, in this application, first specified information, for example, a preset value or a preset character string, may be embedded into the target area corresponding to the first check information or another target area (for example, a target area adjacent to the target area corresponding to the first check information) in the second image. The encoder and the decoder may pre-agree upon the first specified information, so that the encoder can determine whether the first check information is damaged.

For example, second specified information may be extracted from the third image. When the first specified information is the same as the second specified information, it can be determined that the first check information is not damaged, to be specific, the first check information is the same as the second check information. In this case, S409 may be performed. When the first specified information is different from the second specified information, it can be determined that the first check information is damaged, to be specific, the first check information is different from the second check information. In this case, S415 may be performed.

For example, the decoder and the encoder may extract the second check information or the fourth index value from the third image based on the pre-agreed-upon embedding location of the first check information in the second image, the size of the target area, in the second image, that corresponds to the first check information, and a size of the third image.

For example, the decoder and the encoder may extract, from the third image, the embedding location of the first check information in the second image and the size of the target area, in the second image, that corresponds to the first check information based on the pre-agreed-upon embedding location of the embedding location of the first check information in the second image, the embedding location of the size of the target area corresponding to the first check information, and the embedding location of the size of the second image; and then extract the second check information or the fourth index value from the third image based on the embedding location of the first check information in the second image and the size of the target area, in the second image, that corresponds to the first check information.

S409: The encoder obtains third check information.

For example, when the first check information is preset luminance information, the third check information is also the preset luminance information.

For example, when the first check information is determined through calculation based on the pixel value of the first image, the encoder may perform calculation based on a pixel value of the third image, to determine the third check information. For a manner of determining the third check information, refer to the foregoing manner of determining the first check information. Details are not described herein again.

It should be understood that the third check information determined by the encoder corresponds to the first check information determined by the decoder. For example, when the first check information is the average luminance information of the first image, the third check information is average luminance information of the third image. For another example, when the first check information may include the maximum luminance information of the first image and the minimum luminance information of the first image, the third check information may include maximum luminance information of the third image and minimum luminance information of the third image, and so on.

S410: The encoder determines whether the second check information matches the third check information.

For example, the encoder may determine whether the first format information is damaged by determining whether the second check information matches the third check information. When the second check information does not match the third check information, it can be determined that the first format information is damaged, and in this case, S415 may be performed. When the second check information matches the third check information, it can be determined that the first format information is not damaged, and in this case, S411 to S414 may be performed.

In a possible manner, when a difference between the second check information and the third check information is greater than or equal to a first preset check threshold, it can be determined that the second check information does not match the third check information; or when a difference between the second check information and the third check information is less than a first preset check threshold, it can be determined that the second check information matches the third check information.

In a possible manner, when a change rate between the second check information and the third check information is greater than or equal to a second preset check threshold, it can be determined that the second check information does not match the third check information; or when a change rate between the second check information and the third check information is less than a second preset check threshold, it can be determined that the second check information matches the third check information.

It should be understood that whether the second check information matches the third check information may alternatively be determined in another manner. This is not limited in this application.

S411: The encoder determines second format information based on the third image.

For example, when the decoder has embedded the character string corresponding to the first format information into the second image, the format conversion module of the encoder may extract the second format information from the third image.

For example, when the decoder has embedded the first index value corresponding to the first format information into the second image, the format conversion module of the encoder may extract a second index value from the third image, and then perform mapping based on a corresponding format information set and the second index value, to determine the second format information.

For example, when the second check information matches the third check information, it can be determined that the first format information is the same as the second format information.

S412: The encoder obtains preconfigured third format information.

S413: The encoder performs format conversion on the third image based on the second format information and the third format information to obtain a fourth image.

S414: The encoder encodes the fourth image to obtain a second bitstream, and sends the second bitstream to the application.

For example, for S411 to S414, refer to the descriptions of S206 to S209. Details are not described herein again.

S415: The encoder encodes the third image to obtain a third bitstream, and sends the third bitstream to the application.

In addition, when the encoder cannot determine the second format information based on the third image, S415 may alternatively be performed.

When the first format information is damaged due to editing performed by the application on the second image, format conversion cannot be correctly performed on the third image. Further, when it is determined, during checking on the third image based on the second check information, that the first format information is damaged, the third image is directly encoded. This can save computing power of the encoder, and reduce time used for transcoding. Alternatively, when it is determined, during checking on the third image based on the second check information, that the first format information is not damaged, format conversion can be correctly performed on the third image. Further, format conversion may be performed on the third image, and then a format-converted third image (that is, the fourth image) is encoded. This can improve quality of an image obtained by the receive end through decoding.

In a possible manner, during decoding, a first preset identifier used to identify whether the first format information is embedded into the second image may be embedded into the second image. In this way, during encoding, when it is determined, based on the first preset identifier, that the second format information is embedded into the third image, the second format information can be determined based on the third image; and then the fourth image is encoded after format conversion is performed on the third image based on the second format information and the third format information to obtain the fourth image. When it is determined, based on the first preset identifier, that the second format information is not embedded into the third image, the third image may be directly encoded.

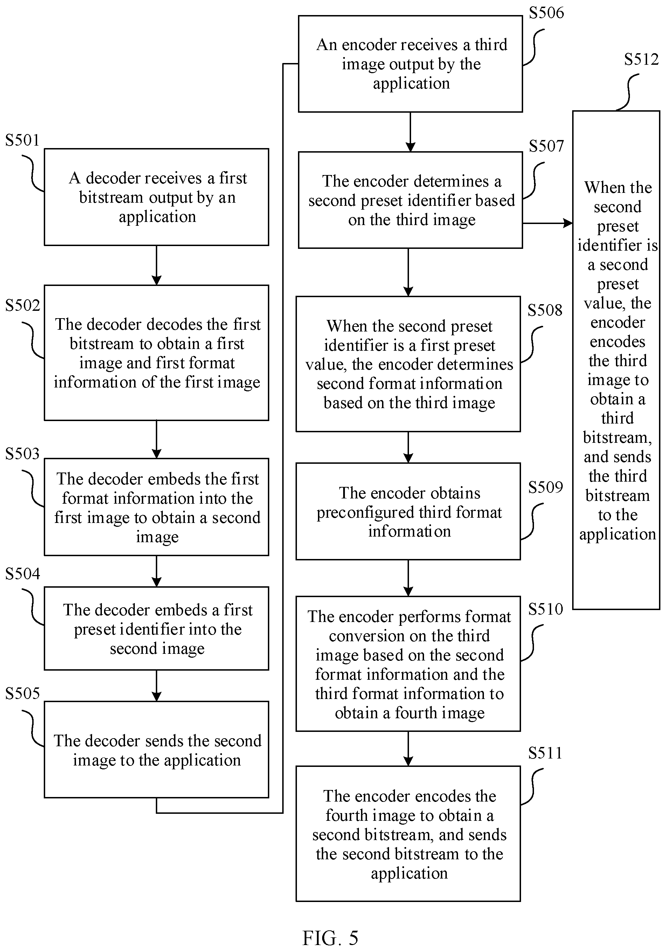

FIG. 5 is a diagram of an example transcoding process. In the embodiment of FIG. 5, transcoding a frame of image in a video is used as an example for description.

S501: The decoder receives a first bitstream output by the application.

S502: The decoder decodes the first bitstream to obtain a first image and first format information of the first image.

S503: The decoder embeds the first format information into the first image to obtain a second image.

For example, for S501 to S503, refer to the foregoing descriptions of S201 to S203. Details are not described herein again.

S504: The decoder embeds a first preset identifier into the second image.

For example, the first preset identifier being a first preset value indicates that the first format information is embedded into the second image, and the first preset identifier being a second preset value indicates that the first format information is not embedded into the second image. The first preset value and the second preset value may be set according to a requirement. For example, the first preset value is 0, and the second preset value is 1. This is not limited in this application.

For example, S504 may include the following sub-steps S31 and S32.

S31: Select a target area from the second image, where an overlapping part exists between an edge of the target area and an edge of the second image.

S32: Embed the first preset identifier into the target area of the second image.

For S31 and S32, refer to the foregoing descriptions of S11 and S12. Details are not described herein again.

It should be noted that the target area selected from the second image in the embodiment of FIG. 5, the target area selected from the first image in the embodiment of FIG. 4a, and the target area selected from the second image in the embodiment of FIG. 4a do not overlap.

In a possible manner, the decoder may alternatively embed, into the second image, an embedding location of the first preset identifier in the second image.

A third location information set may be pre-established. The third location information set may include coordinates of an upper-left corner of a target area, in the second image, into which the first preset identifier is correspondingly embedded. For example, the third location information set may be {(0, 4)}, where (0, 4) represents the coordinates of the upper-left corner of the target area, in the second image, into which the first preset identifier is correspondingly embedded. For a specific manner of embedding, into the second image, the embedding location of the first preset identifier in the second image, refer to the foregoing descriptions of embedding the first preset identifier into the second image. Details are not described herein again.

In addition, the decoder may alternatively embed, into the second image, a size of a target area, in the second image, into which the first preset identifier is correspondingly embedded. A third area size information set may be pre-established, and the third size information set may include a size of a target area, in the second image, into which the first preset identifier is correspondingly embedded. For example, the first preset identifier includes maximum luminance information of the first image and minimum luminance information of the first image, and the third size information set may be {(2, 2)}, where (2, 2) represents the size of the target area, in the second image, into which the first preset identifier is correspondingly embedded. For a specific manner of embedding, into the second image, the size of the target area, in the second image, into which the first preset identifier is correspondingly embedded, refer to the foregoing descriptions of embedding the first preset identifier into the second image. Details are not described herein again.

In addition, when a size of the first image is not embedded into the second image in a process of embedding the first format information in S503, the decoder may alternatively embed a size of the second image into the second image. A third image size information set may alternatively be pre-established, and the third image size information set may include a plurality of sizes. For example, the third image size information set may be {100×100, 240×480, 720×1080}. For a specific manner of embedding the size of the second image into the second image, refer to the foregoing descriptions of embedding the first preset identifier into the second image. Details are not described herein again.

In this way, the decoder and the encoder only need to agree upon an embedding location of the embedding location of the first preset identifier in the second image, an embedding location of the size of the target area of the first preset identifier, and an embedding location of the size of the second image.

It should be understood that the decoder may alternatively not need to embed, into the second image, the embedding location of the first preset identifier in the second image; not need to embed, into the second image, the size of the target area, in the second image, into which the first preset identifier is correspondingly embedded; and not need to embed the size of the second image into the second image. In this case, the decoder and the encoder only need to pre-agree upon the embedding location of the first preset identifier in the second image, or the size of the target area, in the second image, into which the first preset identifier is correspondingly embedded.

For example, editing the image may alternatively damage the first preset identifier. Therefore, in this application, first specified information, for example, a preset value or a preset character string, may be embedded into the target area corresponding to the first preset identifier or another target area (for example, a target area adjacent to the target area corresponding to the first preset identifier) in the second image. The encoder and the decoder may pre-agree upon the first specified information, so that the encoder can determine whether the first preset identifier is damaged.

S505: The decoder sends the second image to the application.

S506: The encoder receives a third image output by the application, where the third image is the second image or an image obtained by the application by editing the second image.

For example, for S505 and S506, refer to the foregoing descriptions of S204 and S205. Details are not described herein again.

S507: The encoder determines a second preset identifier based on the third image.

For example, the encoder may determine the second preset identifier based on the third image, to determine whether the first format information is embedded into the third image.

For example, for S507, refer to the foregoing descriptions of S408. Details are not described herein again.

For example, second specified information may be extracted from the third image. When the first specified information is the same as the second specified information, it can be determined that the first preset identifier is not damaged, to be specific, the first preset identifier is the same as the second preset identifier. In this case, whether the first format information is embedded into the third image can be determined. When the first specified information is different from the second specified information, it can be determined that the first preset identifier is damaged, to be specific, the first preset identifier is different from the second preset identifier. In this case, S512 may be performed.

S508: When the second preset identifier is a first preset value, the encoder determines second format information based on the third image.

S509: The encoder obtains preconfigured third format information.

S510: The encoder performs format conversion on the third image based on the second format information and the third format information to obtain a fourth image.

S511: The encoder encodes the fourth image to obtain a second bitstream, and sends the second bitstream to the application.

For example, for S508 to S511, refer to the descriptions of S206 to S209. Details are not described herein again.

S512: When the second preset identifier is a second preset value, the encoder encodes the third image to obtain a third bitstream, and sends the third bitstream to the application.

In addition, when the encoder cannot determine the second format information based on the third image, S512 may alternatively be performed.

In this way, when the decoder has not embedded the first format information into the first image or has failed to embed the first format information into the first image, the encoder may directly encode the third image without determining the second format information based on the third image. This can reduce invalid operations, save computing power of the encoder, and reduce time used for transcoding.

For example, the embodiment of FIG. 4a and the embodiment of FIG. 5 may be combined. Refer to the following S601 to S617.

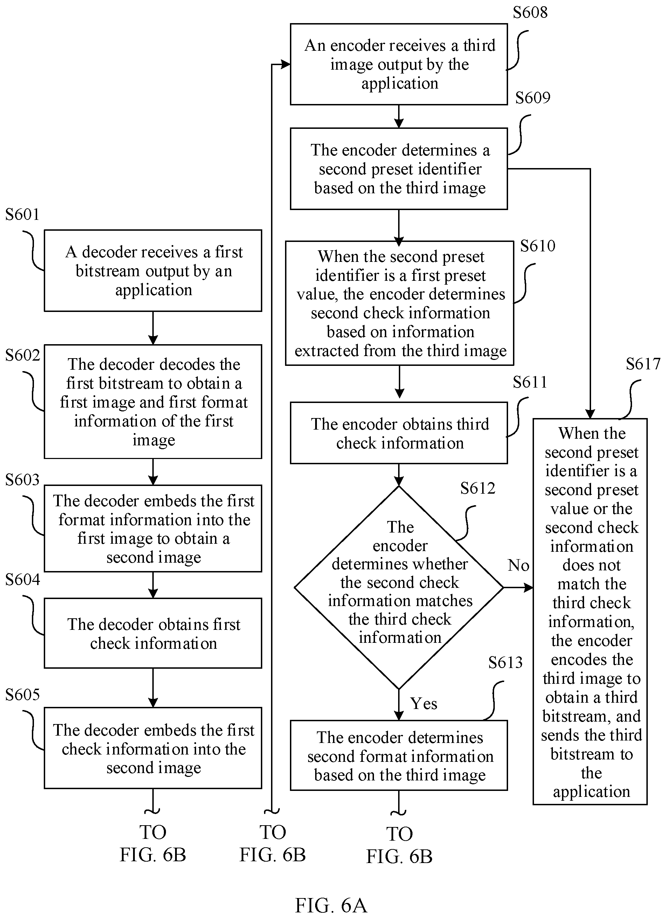

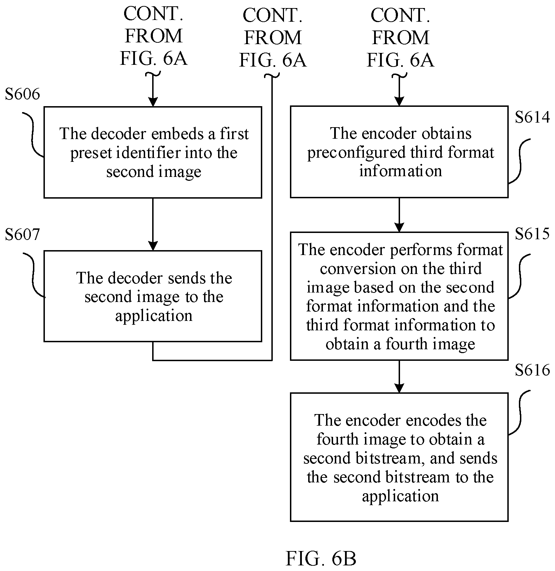

FIG. 6A and FIG. 6B are a diagram of an example transcoding process. In the embodiment of FIG. 6A and FIG. 6B, transcoding a frame of image in a video is used as an example for description.

S601: The decoder receives a first bitstream output by the application.

S602: The decoder decodes the first bitstream to obtain a first image and first format information of the first image.

S603: The decoder embeds the first format information into the first image to obtain a second image.

S604: Obtain first check information.

S605: Embed the first check information into the second image.

S606: Embed a first preset identifier into the second image.

For example, a sequence of performing S604 and S605 and performing S606 is not limited in this application.

S607: The decoder sends the second image to the application.

S608: The encoder obtains a third image output by the application, where the third image is the second image or an image obtained by the application by editing the second image.

S609: The encoder determines a second preset identifier based on the third image.

S610: When the second preset identifier is a first preset value, the encoder determines second check information based on information extracted from the third image.

S611: The encoder obtains third check information.

S612: The encoder determines whether the second check information matches the third check information.

S613: When the second check information matches the third check information, the encoder determines second format information based on the third image.

S614: The encoder obtains preconfigured third format information.

S615: The encoder performs format conversion on the third image based on the second format information and the third format information to obtain a fourth image.

S616: The encoder encodes the fourth image to obtain a second bitstream, and sends the second bitstream to the application.

For example, for S611 to S614, refer to the descriptions of S206 to S209. Details are not described herein again.

S617: When the second preset identifier is a second preset value or the second check information does not match the third check information, the encoder encodes the third image to obtain a third bitstream, and sends the third bitstream to the application.

In addition, when the encoder cannot extract the second format information from the third image, S615 may alternatively be performed.

For example, for S601 to S617, refer to the foregoing descriptions. Details are not described herein again.

This can also reduce invalid operations, save computing power of the encoder, and reduce time used for transcoding.

It should be noted that, regardless of whether the first preset identifier and/or the first check information are/is embedded into the second image, first specified information, for example, a preset value or a preset character string, may be embedded into a target area, in the first image, that corresponds to a first format, or another target area (for example, a target area adjacent to the target area corresponding to the first preset identifier). The encoder and the decoder may pre-agree upon the first specified information. In this way, even if the second preset identifier is the second preset value and the second check information matches the third check information, the encoder can determine, based on the first specified information, whether a first format identifier is damaged.

It should be understood that a manner of determining, by the encoder, whether the first format identifier is damaged and a manner of determining, by the encoder, whether the first preset identifier is damaged are not limited in this application.

The following describes a process of performing format conversion on the third image. An example in which the second format information includes second color gamut format information and a second optical-electro transfer function and the third format information includes third color gamut format information and a third optical-electro transfer function is used below for description.

When the second color gamut format information is different from the third color gamut format information, a color gamut of the third image may be converted, based on the second color gamut format information and the third color gamut format information, into a color gamut corresponding to the third color gamut format information, to obtain the fourth image. Specifically, refer to the following steps S701 to S706.

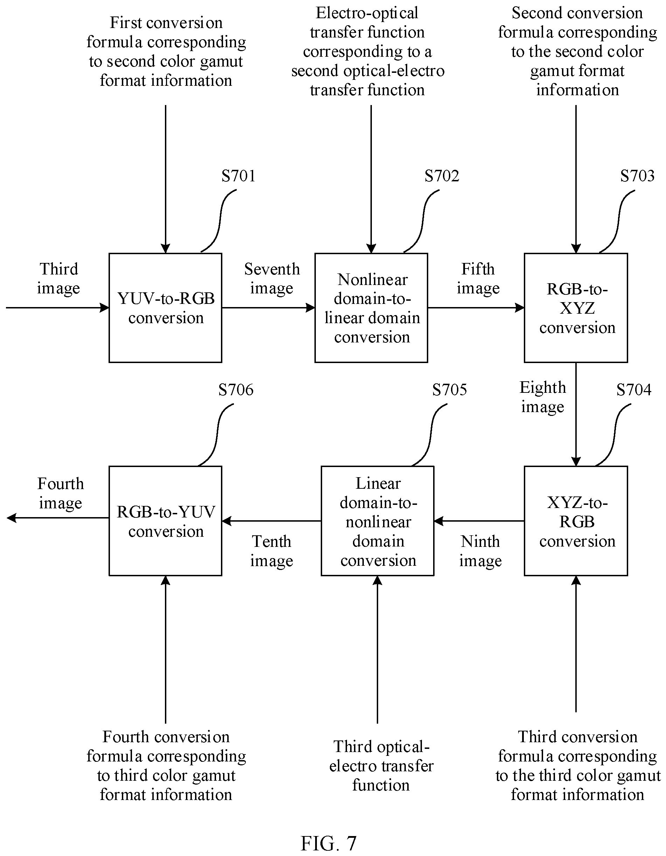

FIG. 7 is a diagram of an example format conversion process.

S701: Convert the third image from a YUV format to an RGB format based on a first conversion formula corresponding to the second color gamut format information, to obtain a seventh image.

For example, in a process of converting the third image from a color gamut corresponding to the second color gamut format information to the color gamut corresponding to the third color gamut format information, conversion is performed by using an optical-electro transfer function and an electro-optical transfer function, where an image converted by using the optical-electro transfer function and the electro-optical transfer function is an image in the RGB format. Therefore, when an image obtained by the decoder through decoding is not an image in the RGB format, the image obtained by the decoder through decoding may be converted into an image in the RGB format.

In a possible manner, the image obtained by the decoder through decoding is in the YUV format, in other words, the third image is in the YUV format. In this case, the third image may be converted from the YUV format to the RGB format, to obtain the seventh image. Specifically, different conversion formulas are used for converting the YUV format into the RGB format in different color gamuts. The third image may be converted from the YUV format to the RGB format by using the first conversion formula corresponding to the second color gamut format information, to obtain the seventh image. The first conversion formula may be a formula for converting YUV into RGB.

For example, the second color gamut format information is BT.2020. In this case, the first conversion formula may be shown in the following formula (10):

$$\begin{cases} R = Y + 1.4746 * (Cr - 128) \\ G = Y - 0.1645(Cb - 128) - 0.5713 * (Cr - 128) \\ B = Y + 1.8814 * (Cb - 128) \end{cases} \quad (10)$$

It should be understood that, when the image obtained by the decoder through decoding is in another format such as XYZ or Lab, the third image may be converted from the another format to the RGB format. This is not limited in this application.

S702: Convert the seventh image based on an electro-optical transfer function corresponding to the second optical-electro transfer function, to obtain a fifth image.

For example, the electro-optical transfer function (Electro-Optical Transfer Function, EOTF) is an inverse function of the optical-electro transfer function, and is used to convert a nonlinear signal into a linear signal.

For example, a pixel value of an image pixel obtained by the decoder through decoding is a nonlinear signal value. To be specific, both the third image and the seventh image belong to a nonlinear domain. A pixel value of a pixel of the seventh image may be converted by using the electro-optical transfer function of the second optical-electro transfer function, to convert the seventh image from the nonlinear domain to a linear domain, to obtain the fifth image.

For example, when the second optical-electro transfer function is a gamma optical-electro transfer function, the electro-optical transfer function of the second optical-electro transfer function may be an inverse gamma optical-electro transfer function (or a gamma electro-optical transfer function). The pixel value of the pixel of the seventh image may be converted by using an inverse function of the foregoing formula (1), to convert the seventh image from the nonlinear domain to the linear domain, to obtain the fifth image.

For example, when the second optical-electro transfer function is a PQ optical-electro transfer function, the electro-optical transfer function of the second optical-electro transfer function may be an inverse PQ optical-electro transfer function (or a PQ electro-optical transfer function). The pixel value of the pixel of the seventh image may be converted by using an inverse function of the foregoing formula (2), to convert the seventh image from the nonlinear domain to the linear domain, to obtain the fifth image.

For example, when the second optical-electro transfer function is an HLG optical-electro transfer function, the electro-optical transfer function of the second optical-electro transfer function may be an inverse HLG optical-electro transfer function (or an HLG electro-optical transfer function). The pixel value of the pixel of the seventh image may be converted by using an inverse function of the foregoing formula (4), to convert the seventh image from the nonlinear domain to the linear domain, to obtain the fifth image.

For example, when the second optical-electro transfer function is an SLF optical-electro transfer function, the electro-optical transfer function of the second optical-electro transfer function may be an inverse SLF optical-electro transfer function (or an SLF electro-optical transfer function). The pixel value of the pixel of the seventh image may be converted by using an inverse function of the foregoing formula (5), to convert the seventh image from the nonlinear domain to the linear domain, to obtain the fifth image.

S703: Convert the fifth image from the RGB format to an XYZ format based on a second conversion formula corresponding to the second color gamut format information, to obtain an eighth image.

For example, conversion from the color gamut corresponding to the second color gamut format information to the color gamut corresponding to the third color gamut format information may be performed in the XYZ format.

For example, the second conversion formula corresponding to the second color gamut format information may be a formula for converting RGB into XYZ. When the second color gamut format information is the BT.2020, the second conversion formula may be shown in the following formula (11):

$$\begin{bmatrix} X \\ Y \\ Z \end{bmatrix} = \begin{bmatrix} 0.6370 & 0.1446 & 0.1689 \\ 0.2627 & 0.1446 & 0.0593 \\ 0 & 0.0281 & 1.0610 \end{bmatrix} * \begin{bmatrix} R \\ G \\ B \end{bmatrix} \quad (11)$$

S704: Convert the eighth image from the XYZ format to the RGB format based on a third conversion formula of the third color gamut format information, to obtain a ninth image.

For example, the third conversion formula corresponding to the second color gamut format information may be a formula for converting XYZ into RGB. When the second color gamut format information is BT.709, the third conversion formula may be shown in the following formula (12):

$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} * \begin{bmatrix} R \\ G \\ B \end{bmatrix} \qquad (12)$$

S705: Convert the ninth image based on the third optical-electro transfer function to obtain a tenth image.

For example, when the third optical-electro transfer function is a gamma optical-electro transfer function, a pixel value of each pixel of the ninth image may be converted by using the foregoing formula (1), to convert the ninth image from the linear domain to the nonlinear domain, to obtain the tenth image.

For example, when the third optical-electro transfer function is a PQ optical-electro transfer function, a pixel value of each pixel of the ninth image may be converted by using the foregoing formula (2), to convert the ninth image from the linear domain to the nonlinear domain, to obtain the tenth image.

For example, when the third optical-electro transfer function is an HLG optical-electro transfer function, a pixel value of each pixel of the ninth image may be converted by using the foregoing formula (4), to convert the ninth image from the linear domain to the nonlinear domain, to obtain the tenth image.

For example, when the third optical-electro transfer function is an SLF optical-electro transfer function, a pixel value of each pixel of the ninth image may be converted by using the foregoing formula (5), to convert the ninth image from the linear domain to the nonlinear domain, to obtain the tenth image.

S706: Convert the tenth image from the RGB format to the YUV format based on a fourth conversion formula corresponding to the third color gamut format information, to obtain the fourth image.

For example, when an image encoded by the encoder is an image in the YUV format, the tenth image may be converted from the RGB format to the YUV format based on the fourth conversion formula corresponding to the third color gamut format information, to obtain the fourth image. The fourth conversion formula is a formula for converting RGB into YUV

For example, assuming that the third color gamut format information is the BT.709, the fourth conversion formula may be shown in the following formula (13):

$$\begin{cases} Y = 0.2126 * R + 0.7154 * G + 0.072 * B \\ Cb = \left( -0.1145 * R - 0.3855 * G + 0.500 * B \right) + 128 \qquad (13) \\ Cr = \left( 0.500 * R - 0.4543 * G - 0.0457 * B \right) + 128 \end{cases}$$

For example, RGB, YUV, XYZ, and Lab represent a CIE 1931 RGB color space, a YUV color space (including variants such as YCbCr, YPbPr, and YCoCg), a CIE 1931 XYZ color space, and a CIELAB color space respectively.

When the second optical-electro transfer function is different from the third optical-electro transfer function, the third image may be converted based on an electro-optical transfer function corresponding to the second optical-electro transfer function, to obtain a fifth image; and the fifth image may be converted based on the third optical-electro transfer function to obtain the fourth image. Specifically, refer to the following S801 to S805.

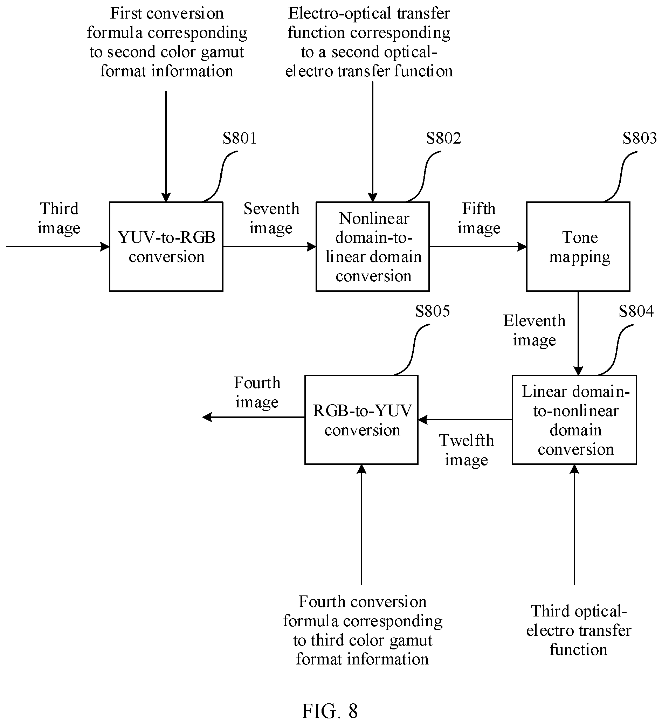

FIG. 8 is a diagram of an example format conversion process.

S801: Convert the third image from a YUV format to an RGB format based on a first conversion formula corresponding to the second color gamut format information, to obtain a seventh image.

S802: Convert the seventh image based on the electro-optical transfer function of the second optical-electro transfer function, to obtain the fifth image.

For example, for S801 and S802, refer to the foregoing descriptions of S701 and S702. Details are not described herein again.

S803: Perform tone mapping (tone mapping) on the fifth image to obtain an eleventh image.

For example, tone mapping may be performed on the fifth image by using a tone mapping algorithm, to obtain the eleventh image.

In a possible manner, tone mapping may be performed by using a global tone mapping algorithm, to obtain the eleventh image. To be specific, all pixels of the entire fifth image are processed by using a same mapping function, to obtain the eleventh image.

In a possible manner, tone mapping may be performed by using a local tone mapping algorithm, to obtain the eleventh image. To be specific, pixels included in a local area in the fifth image are processed by using a same mapping function, to obtain the eleventh image.

S804: Convert the eleventh image based on the third optical-to-electrical transfer function to obtain a twelfth image.

S805: Convert the twelfth image from the RGB format to the YUV format based on a fourth conversion formula corresponding to the third color gamut format information, to obtain the fourth image.

For example, for S804 and S805, refer to the foregoing descriptions of S704 and S705. Details are not described herein again.

When the second optical-electro transfer function is different from the third optical-electro transfer function and the second color gamut format information is different from the third color gamut format information, specifically, refer to the following S901 to S907 in which format conversion is performed on the third image to obtain the fourth image.

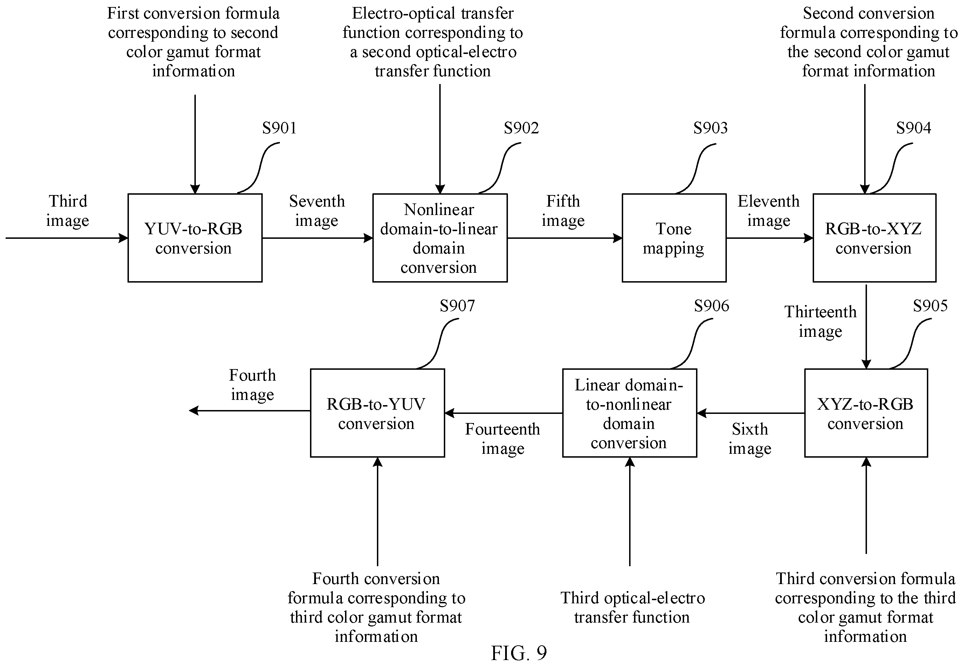

FIG. 9 is a diagram of an example format conversion process.

S901: Convert the third image from a YUV format to an RGB format based on a first conversion formula corresponding to the second color gamut format information, to obtain a seventh image.

S902: Convert the seventh image based on an electro-optical transfer function of the second optical-electro transfer function, to obtain a fifth image.

S903: Perform tone mapping on the fifth image to obtain an eleventh image.

For example, a sequence of performing S902 and S903 is not limited in this application.

S904: Convert the eleventh image from the RGB format to an XYZ format based on a second conversion formula corresponding to the second color gamut format information, to obtain a thirteenth image.

S905: Convert the thirteenth image from the XYZ format to the RGB format based on a third conversion formula of the third color gamut format information, to obtain a sixth image.

S906: Convert the sixth image based on the third optical-to-electrical transfer function to obtain a fourteenth image.

S907: Convert the fourteenth image from the RGB format to the YUV format based on a fourth conversion formula corresponding to the third color gamut format information, to obtain the fourth image.

For example, for S901 to S907, refer to the foregoing descriptions. Details are not described herein again.

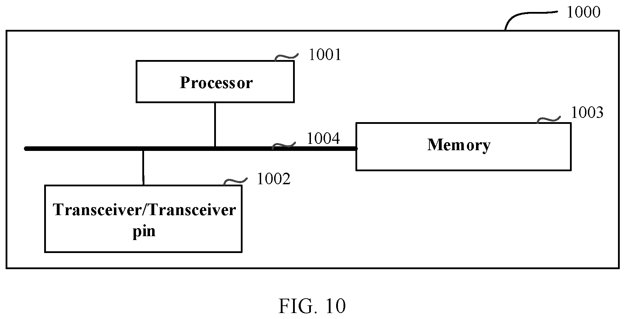

In an example, FIG. 10 is a block diagram of an apparatus 1000 according to an embodiment of this application. The apparatus 1000 may include a processor 1001 and a transceiver or transceiver pin 1002, and optionally, further includes a memory 1003.

Components of the apparatus 1000 are coupled together through a bus 1004. In addition to a data bus, the bus 1004 further includes a power bus, a control bus, and a status signal bus. However, for clarity of description, various buses are referred to as the bus 1004 in the figure.

Optionally, the memory 1003 may be configured to store instructions in the foregoing method embodiments. The processor 1001 may be configured to execute the instructions in the memory 1003, control a receive pin to receive a signal, and control a transmit pin to send a signal.

The apparatus 1000 may be the electronic device in the foregoing method embodiments or a chip of the electronic device.

For example, the electronic device may be a terminal device.

All related content of the steps in the foregoing method embodiments may be cited in function descriptions of corresponding functional modules. Details are not described herein again.

An embodiment further provides a chip. The chip includes one or more interface circuits and one or more processors. The one or more processors sends/send or receives/receive data through the one or more interface circuits. When the one or more processors executes/execute computer instructions, an electronic device is enabled to perform the foregoing related method steps to implement the transcoding method in the foregoing embodiments. The interface circuit may be the transceiver or transceiver pin 1602.

An embodiment further provides a computer-readable storage medium. The computer-readable storage medium stores computer instructions. When the computer instructions are run on an electronic device, the electronic device is enabled to perform the foregoing related method steps to implement the transcoding method in the foregoing embodiments.

An embodiment further provides a computer program product. The computer program product includes computer instructions. When the computer instructions are executed by a computer or a processor, the computer is enabled to perform the foregoing related steps to implement the transcoding method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the transcoding method in the foregoing method embodiments.

The electronic device, the computer-readable storage medium, the computer program product, or the chip provided in embodiments is configured to perform the corresponding method provided above. Therefore, for benefits that can be achieved, refer to the benefits in the corresponding method provided above. Details are not described herein again.

Based on the descriptions of the foregoing implementations, a person skilled in the art may understand that, for ease and brevity of description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may be one or more physical units, may be located in one place, or may be distributed in different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

Any content in embodiments of this application and any content in a same embodiment may be combined in any manner. Any combination of the foregoing content falls within the scope of this application.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

Methods or algorithm steps described with reference to the content disclosed in embodiments of this application may be implemented by hardware, or may be implemented by a processor executing software instructions. The software instructions may include corresponding software modules. The software modules may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium suitable for transmitting a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

**Claims**

1. A transcoding apparatus, wherein the transcoding apparatus comprises a decoder and an encoder, wherein

   the decoder is configured to: receive a first bitstream output by an application; decode the first bitstream to obtain a first image and first format information of the first image; embed the first format information into the first image to obtain a second image; and send the second image to the application; and
   the encoder is configured to: receive a third image output by the application, wherein the third image is the second image or a second image edited by the application; determine second format information based on the third image; obtain preconfigured third format information; perform format conversion on the third image based on the second format information and the third format information to obtain a fourth image; encode the fourth image to obtain a second bitstream; and send the second bitstream to the application.

2. The apparatus according to claim 1, wherein
   the decoder is specifically configured to: select a target area from the first image, wherein an overlapping part exists between an edge of the target area and an edge of the first image, and a size of the target area is less than a size of the first image; and embed the first format information into the target area of the first image to obtain the second image.

3. The apparatus according to claim 2, wherein
   the decoder is specifically configured to: determine a first index value of the first format information; and embed the first index value of the first format information into the target area of the first image to obtain the second image.

4. The apparatus according to claim 3, wherein
   the decoder is specifically configured to: replace pixel values of all or some of pixels comprised in the target area with the first index value of the first format information.

5. The apparatus according to claim 3 or 4, wherein
   the encoder is specifically configured to: extract a second index value from the third image; and determine the second format information based on the second index value.

6. The apparatus according to any one of claims 1 to 5, wherein the second format information comprises second color gamut format information, and the third format information comprises third color gamut format information; and
   the encoder is specifically configured to: when the second color gamut format information is different from the third color gamut format information, convert a color gamut of the third image into a color gamut corresponding to the third color gamut format information, to obtain the fourth image.

7. The apparatus according to any one of claims 1 to 6, wherein the second format information comprises a second optical-electro transfer function, and the third format information comprises a third optical-electro transfer function; and
   the encoder is specifically configured to: when the second optical-electro transfer function is different from the third optical-electro transfer function, convert the third image based on an electro-optical transfer function corresponding to the second optical-electro transfer function, to obtain a fifth image; and convert the fifth image based on the third optical-electro transfer function to obtain the fourth image.

8. The apparatus according to any one of claims 1 to 7, wherein

   the decoder is further configured to: obtain first check information; and embed the first check information into the second image; and
   the encoder is further configured to: determine second check information based on information extracted from the third image; obtain third check information; and when the second check information matches the third check information, determine the second format information based on the third image.

9. The apparatus according to claim 8, wherein

the decoder is specifically configured to: perform calculation based on a pixel value of the first image, to determine the first check information; and

the encoder is specifically configured to: perform calculation based on a pixel value of the third image, to determine the third check information.

10. The apparatus according to any one of claims 1 to 9, wherein

the decoder is further configured to: embed a first preset identifier into the second image, wherein the first preset identifier indicates whether the first format information is embedded into the second image; and

the encoder is further configured to: determine a second preset identifier based on the third image; and when a value of the second preset identifier is a first preset value, determine the second format information based on the third image; or when a value of the second preset identifier is a second preset value, encode the third image to obtain a third bitstream, and send the third bitstream to the application.

11. A transcoding method, wherein the method comprises:

obtaining a first bitstream;
decoding the first bitstream to obtain a first image and first format information of the first image;
embedding the first format information into the first image to obtain a second image;
obtaining a third image, wherein the third image is the second image or an edited second image;
determining second format information based on the third image, and obtaining preconfigured third format information;
performing format conversion on the third image based on the second format information and the third format information to obtain a fourth image; and
encoding the fourth image to obtain a second bitstream.

12. The method according to claim 11, wherein embedding the first format information into the first image to obtain the second image comprises:

selecting a target area from the first image, wherein an overlapping part exists between an edge of the target area and an edge of the first image, and a size of the target area is less than a size of the first image; and
embedding the first format information into the target area of the first image to obtain the second image.

13. The method according to claim 12, wherein embedding the first format information into the target area of the first image to obtain the second image comprises:

determining a first index value of the first format information; and
embedding the first index value of the first format information into the target area of the first image to obtain the second image.

14. The method according to claim 13, wherein embedding the first index value of the first format information into the target area of the first image to obtain the second image comprises:
replacing pixel values of all or some of pixels comprised in the target area with the first index value of the first format information.

15. The method according to claim 13 or 14, wherein determining the second format information based on the third image comprises:

extracting a second index value from the third image; and
determining the second format information based on the second index value.

16. The method according to any one of claims 11 to 15, wherein the second format information comprises second color gamut format information, and the third format information comprises third color gamut format information; and
performing format conversion on the third image based on the second format information and the third format information to obtain the fourth image comprises:
when the second color gamut format information is different from the third color gamut format information, converting a color gamut of the third image into a color gamut corresponding to the third color gamut format information, to obtain the fourth image.

17. The method according to any one of claims 11 to 16, wherein the second format information comprises a second optical-electro transfer function, and the third format information comprises a third optical-electro transfer function; and

performing format conversion on the third image based on the second format information and the third format information to obtain the fourth image comprises:

when the second optical-electro transfer function is different from the third optical-electro transfer function, converting the third image based on an electro-optical transfer function corresponding to the second optical-electro transfer function, to obtain a fifth image; and

converting the fifth image based on the third optical-electro transfer function to obtain the fourth image.

18. The method according to any one of claims 11 to 17, wherein the method further comprises:

obtaining first check information;
embedding the first check information into the second image;
determining second check information based on information extracted from the third image;
obtaining third check information; and
when the second check information matches the third check information, determining the second format information based on the third image.

19. The method according to claim 18, wherein
obtaining the first check information comprises:

performing calculation based on a pixel value of the first image, to determine the first check information; and
obtaining the third check information comprises:
performing calculation based on a pixel value of the third image determine the third check information.

20. The method according to any one of claims 11 to 19, wherein the method further comprises:

embedding a first preset identifier into the second image, wherein the first preset identifier indicates whether the first format information is embedded into the second image;
determining a second preset identifier based on the third image; and
when a value of the second preset identifier is a first preset value, determining the second format information based on the third image; or
when a value of the second preset identifier is a second preset value, encoding the third image to obtain a third bitstream.

21. An electronic device, comprising:

a memory and a processor, wherein the memory is coupled to the processor, wherein
the memory stores program instructions, and when the program instructions are executed by the processor, the electronic device is enabled to perform the transcoding method according to any one of claims 11 to 20.

22. A chip, comprising one or more interface circuits and one or more processors, wherein the one or more processors sends/send or receives/receive data through the one or more interface circuits, and when the one or more processors executes/execute computer instructions, the electronic device is enabled to perform the transcoding method according to any one of claims 11 to 20.

23. A computer-readable storage medium, wherein the computer-readable storage medium stores a computer program, and when the computer program is run on a computer or a processor, the computer or the processor is enabled to perform the transcoding method according to any one of claims 11 to 20.

24. A computer program product, wherein the computer program product comprises computer instructions, and when the computer instructions are executed by a computer or a processor, the method according to any one of claims 11 to 20 is performed.

FIG. 1a(1)

102

FIG. 1a(2)

103

Today

Yesterday

Preview

Send

FIG. 1a(3)

FIG. 1a(4)

Terminal device

Application

Bitstream obtaining module

Image processing module

Configuration module

Bitstream sending module

First bitstream

Second image

Third image

Third format information

Second bitstream

Transcoding apparatus

Decoder

Decoding module

First image

Information embedding module

First format information

Format conversion module

Fourth image

Encoding module

Encoder

FIG. 1b

EP 4 622 274 A1

FIG. 2a

EP 4 622 274 A1

FIG. 2b

EP 4 622 274 A1

FIG. 3a

FIG. 3b

FIG. 3c

S407

An encoder receives a third
image output by the application

S401

A decoder receives a first
bitstream output by an
application

S408

The encoder determines second
check information based on
information extracted from the
third image

S402

The decoder decodes the first
bitstream to obtain a first image
and first format information of
the first image

S409

The encoder obtains third
check information

S415

S403

The decoder embeds the first
format information into the first
image to obtain a second image

S410

The
encoder
determines
whether the second check
information matches
the third check
information

No

The
encoder
encodes the
third image
to obtain a
third
bitstream,
and sends
the third
bitstream to
the
application

S404

The decoder obtains first check
information

S405

The decoder embeds the first
check information into the
second image

Yes

S411

The encoder determines second
format information based on
the third image

S406

The decoder sends the second
image to the application

The encoder obtains
preconfigured third format
information

S412

The encoder performs format
conversion on the third image
based on the second format
information and the third
format information to obtain a
fourth image

S413

The encoder encodes the fourth
image to obtain a second
bitstream, and sends the second
bitstream to the application

S414

FIG. 4a

Target area 1        Edge area 1        Target area 2

Edge area 4        Edge area 3

First image

Edge area 2

FIG. 4b

S506
An encoder receives a third image output by the application

S512
When the second preset identifier is a second preset value, the encoder encodes the third image to obtain a third bitstream, and sends the third bitstream to the application

S501
A decoder receives a first bitstream output by an application

S507
The encoder determines a second preset identifier based on the third image

S502
The decoder decodes the first bitstream to obtain a first image and first format information of the first image

S508
When the second preset identifier is a first preset value, the encoder determines second format information based on the third image

S503
The decoder embeds the first format information into the first image to obtain a second image

S509
The encoder obtains preconfigured third format information

S504
The decoder embeds a first preset identifier into the second image

S510
The encoder performs format conversion on the third image based on the second format information and the third format information to obtain a fourth image

S505
The decoder sends the second image to the application

S511
The encoder encodes the fourth image to obtain a second bitstream, and sends the second bitstream to the application

FIG. 5

S608

An encoder receives a third image output by the application

S609

The encoder determines a second preset identifier based on the third image

S601

A decoder receives a first bitstream output by an application

S602

The decoder decodes the first bitstream to obtain a first image and first format information of the first image

S610

When the second preset identifier is a first preset value, the encoder determines second check information based on information extracted from the third image

S603

The decoder embeds the first format information into the first image to obtain a second image

S611

The encoder obtains third check information

S617

When the second preset identifier is a second preset value or the second check information does not match the third check information, the encoder encodes the third image to obtain a third bitstream, and sends the third bitstream to the application

S604

The decoder obtains first check information

S612

The encoder determines whether the second check information matches the third check information

No

S605

The decoder embeds the first check information into the second image

Yes

S613

The encoder determines second format information based on the third image

TO
FIG. 6B

TO
FIG. 6B

TO
FIG. 6B

FIG. 6A

CONT. FROM FIG. 6A     CONT. FROM FIG. 6A     CONT. FROM FIG. 6A

S606

The decoder embeds a first preset identifier into the second image

S607

The decoder sends the second image to the application

S614

The encoder obtains preconfigured third format information

S615

The encoder performs format conversion on the third image based on the second format information and the third format information to obtain a fourth image

S616

The encoder encodes the fourth image to obtain a second bitstream, and sends the second bitstream to the application

FIG. 6B

First conversion formula corresponding to second color gamut format information

Electro-optical transfer function corresponding to a second optical-electro transfer function

Second conversion formula corresponding to the second color gamut format information

S701

S702

S703

Third image → YUV-to-RGB conversion → Seventh image → Nonlinear domain-to-linear domain conversion → Fifth image → RGB-to-XYZ conversion

S706

S705

Eighth image

S704

Fourth image ← RGB-to-YUV conversion ← Tenth image ← Linear domain-to-nonlinear domain conversion ← Ninth image ← XYZ-to-RGB conversion

Fourth conversion formula corresponding to third color gamut format information

Third optical-electro transfer function

Third conversion formula corresponding to the third color gamut format information

FIG. 7

First conversion formula corresponding to second color gamut format information

Electro-optical transfer function corresponding to a second optical-electro transfer function

S801

S802

S803

Third image → YUV-to-RGB conversion → Seventh image → Nonlinear domain-to-linear domain conversion → Fifth image → Tone mapping

Fourth image ← RGB-to-YUV conversion ← Twelfth image ← Linear domain-to-nonlinear domain conversion ← Eleventh image

S805

S804

Fourth conversion formula corresponding to third color gamut format information

Third optical-electro transfer function

FIG. 8

First conversion formula corresponding to second color gamut format information

Electro-optical transfer function corresponding to a second optical-electro transfer function

Second conversion formula corresponding to the second color gamut format information

Third image

Seventh image

Fifth image

Eleventh image

Thirteenth image

S901 YUV-to-RGB conversion

S902 Nonlinear domain-to-linear domain conversion

S903 Tone mapping

S904 RGB-to-XYZ conversion

S905 XYZ-to-RGB conversion

Third conversion formula corresponding to the third color gamut format information

Sixth image

Third optical-electro transfer function

S906 Linear domain-to-nonlinear domain conversion

Fourteenth image

Fourth conversion formula corresponding to third color gamut format information

S907 RGB-to-YUV conversion

Fourth image

FIG. 9

1000

1001

**Processor**

1003

1004

**Memory**

1002

**Transceiver/Transceiver pin**

FIG. 10

## INTERNATIONAL SEARCH REPORT

| International application No. |
| --- |
| **PCT/CN2023/142473** |

**A.    CLASSIFICATION OF SUBJECT MATTER**

H04N 21/2343(2011.01)i

According to International Patent Classification (IPC) or to both national classification and IPC

**B.    FIELDS SEARCHED**

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, IEEE: 转码, 解码, 格式, 嵌入, 编码, 配置, 选取, 区域, 边缘, 尺寸, 索引, 替换, 色域, 光电转移函数, 校验, 匹配, transcode, decode, format, embed, configure, select, area, edge, size, index, replace, chroma, verify, match

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112468792 A (GUANGDONG OPPO MOBILE COMMUNICATIONS CO., LTD.) 09 March 2021 (2021-03-09)<br>entire document | 1-24 |
| A | CN 115442636 A (GUANGZHOU BOGUAN INFORMATION SCIENCE & TECHNOLOGY CO., LTD.) 06 December 2022 (2022-12-06)<br>entire document | 1-24 |
| A | CN 107409223 A (HUAWEI TECHNOLOGIES CO., LTD.) 28 November 2017 (2017-11-28)<br>entire document | 1-24 |
| A | CN 114189691 A (INTERDIGITAL CE PATENT HOLDINGS SAS) 15 March 2022 (2022-03-15)<br>entire document | 1-24 |
| A | US 2009190671 A1 (FUJITSU LTD.) 30 July 2009 (2009-07-30)<br>entire document | 1-24 |

☑ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 March 2024** | **22 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/142473**

C.    DOCUMENTS CONSIDERED TO BE RELEVANT

| Category* | Citation of document, with indication, where appropriate, of the relevant passages | Relevant to claim No. |
|---|---|---|
| A | US 2015281730 A1 (OKI ELECTRIC INDUSTRY CO., LTD.) 01 October 2015 (2015-10-01) entire document | 1-24 |

Form PCT/ISA/210 (second sheet) (July 2022)

## INTERNATIONAL SEARCH REPORT
### Information on patent family members

| International application No. |
| --- |
| PCT/CN2023/142473 |

| Patent document cited in search report | | | Publication date (day/month/year) | Patent family member(s) | | | Publication date (day/month/year) |
| --- | --- | --- | --- | --- | --- | --- | --- |
| CN | 112468792 | A | 09 March 2021 | None | | | |
| CN | 115442636 | A | 06 December 2022 | None | | | |
| CN | 107409223 | A | 28 November 2017 | WO | 2016197323 | A1 | 15 December 2016 |
| | | | | EP | 3300368 | A1 | 28 March 2018 |
| | | | | EP | 3300368 | A4 | 04 July 2018 |
| | | | | JP | 2018524875 | A | 30 August 2018 |
| | | | | US | 2018103258 | A1 | 12 April 2018 |
| | | | | KR | 20180015248 | A | 12 February 2018 |
| CN | 114189691 | A | 15 March 2022 | EP | 3318063 | A1 | 09 May 2018 |
| | | | | JP | 2018524924 | A | 30 August 2018 |
| | | | | WO | 2017001330 | A1 | 05 January 2017 |
| | | | | KR | 20180021747 | A | 05 March 2018 |
| | | | | KR | 102367205 | B1 | 23 February 2022 |
| | | | | US | 2018192077 | A1 | 05 July 2018 |
| | | | | US | 11006151 | B2 | 11 May 2021 |
| | | | | EP | 3113496 | A1 | 04 January 2017 |
| | | | | TW | 201701658 | A | 01 January 2017 |
| | | | | TWI | 763629 | B | 11 May 2022 |
| US | 2009190671 | A1 | 30 July 2009 | US | 8208562 | B2 | 26 June 2012 |
| | | | | JP | 2008312013 | A | 25 December 2008 |
| | | | | JP | 4833923 | B2 | 07 December 2011 |
| US | 2015281730 | A1 | 01 October 2015 | JP | 2015186252 | A | 22 October 2015 |
| | | | | JP | 6421426 | B2 | 14 November 2018 |
| | | | | US | 9635372 | B2 | 25 April 2017 |

Form PCT/ISA/210 (patent family annex) (July 2022)

REFERENCES CITED IN THE DESCRIPTION

**Patent documents cited in the description**

- CN 202310105450